# EUROPÄISCHE PATENTSCHRIFT

(11) **EP 3 494 333 B1**
(45) Veröffentlichungstag und Bekanntmachung des Hinweises auf die Patenterteilung: **02.06.2021**
(21) Anmeldenummer: 17746121.7
(22) Anmeldetag: 01.08.2017
(51) Int. Cl.: F16H 61/688, F16H 61/12, F15B 19/00

(54) **HYDRAULIKSYSTEM FÜR EIN AUTOMATIKGETRIEBE EINES KRAFTFAHRZEUGS**
HYDRAULIC SYSTEM FOR AN AUTOMATIC TRANSMISSION OF A MOTOR VEHICLE
SYSTÈME HYDRAULIQUE POUR UNE TRANSMISSION AUTOMATIQUE D'UN VÉHICULE AUTOMOBILE

(30) Priorität: 03.08.2016 DE 102016214370
(43) Veröffentlichungstag der Anmeldung: 12.06.2019
(73) Patentinhaber: Audi AG, 85045 Ingolstadt (DE)
(72) Erfinder: WEINHARDT, Mathias, 85051 Ingolstadt (DE)
(86) Internationale Anmeldenummer: PCT/EP2017/069447
(87) Internationale Veröffentlichungsnummer: WO 2018/024730

(56) Entgegenhaltungen:
- WO-A1-02/14825
- DE-A1- 10 138 777
- DE-A1- 10 310 300
- DE-A1-102013 003 894
- DE-T5-112013 001 599

## Beschreibung

Die Erfindung betrifft ein Hydrauliksystem für ein Automatikgetriebe, insbesondere Doppelkupplungsgetriebe, eines Kraftfahrzeugs nach dem Patentanspruch 1.

Bei einem Doppelkupplungsgetriebe ist mittels zweier Teilgetriebe ein vollautomatischer Gangwechsel ohne Zugkraftunterbrechung ermöglicht. Die Übertragung des Moments erfolgt über eine von zwei Kupplungen, die die zwei Teilgetriebe mit dem Antrieb verbindet. Die Kupplungen sowie die Gangsteller zum Einlegen der Gänge werden über Hydraulikzylinder betätigt, die hydraulisch über ein Hydrauliksystem ansteuerbar sind.

Aus der DE 10 2014 003 083 A1 ist ein Hydrauliksystem bekannt, das einen Druckspeicher zur Bereitstellung eines Speicherdruckes im Hydrauliksystem aufweist. In einem, vom Druckspeicher zum Kupplungs-Hydraulikzylinder führenden Kupplungspfad ist ein von einer elektronischen Steuereinheit ansteuerbares Steuerventil angeordnet, mit dem der am Kupplungs-Hydraulikzylinder anliegende Hydraulikdruck einstellbar ist. Der Steuereinheit ist bevorzugt ein Drucksensor zugeordnet (DE 10 2013 003 894 A1), mit dem der am Kupplungs-Hydraulikzylinder anliegende Hydraulikdruck erfassbar ist. Zudem weist das Hydrauliksystem eine Lade-Hydraulikpumpe auf, die in einem Ladevorgang Hydraulikflüssigkeit in das Hydrauliksystem fördert, um den Speicherdruck zu erhöhen.

Das Hydrauliksystem kann außerdem mehrere Gangstellerpfade aufweisen, die vom Druckspeicher zum Gangsteller-Hydraulikzylinder des jeweiligen Gangstellers führen. In jedem der Gangstellerpfade ist ein von der Steuereinheit ansteuerbares Gangstellerventil angeordnet, mit dem der am Gangsteller-Hydraulikzylinder anliegende Hydraulikdruck im jeweiligen Gangstellerpfad einstellbar ist.

Aus der DE 10 2011 100 800 ist ein gattungsgemäßes Hydrauliksystem für ein Automatikgetriebe eines Kraftfahrzeugs bekannt. Aus der DE 101 43 830 A1 ist eine Bereitstelleinrichtung zum Bereitstellen von unter Druck stehendem Hydraulikmedium insbesondere zur Betätigung einer Kupplungseinrichtung und/oder eines Getriebes auf hydraulischem Wege in einem Kraftfahrzeug-Antriebsstrang bekannt.

Die Aufgabe der Erfindung besteht darin, ein Hydrauliksystem bereitzustellen, bei dem mit reduziertem sensortechnischem Aufwand die Betriebssicherheit des Druckspeichers gewährleistet werden kann.

Die Aufgabe ist durch die Merkmale des Patentanspruches 1 gelöst. Bevorzugte Weiterbildungen der Erfindung sind in den abhängigen Ansprüchen offenbart.

Erfindungsgemäß weist die elektronische Steuereinheit des Hydrauliksystems ein Diagnosemodul auf, mit dem eine Gangstellerpfad-Diagnose durchführbar ist, bei der das Diagnosemodul unter Nutzung des im obigen, zumindest einen Kupplungspfad angeordneten Drucksensors ein Leckage-Verhalten in dem jeweiligen Gangstellerpfad prüft. Die Gangsteller-Diagnose ist bevorzugt als eine Folge-Diagnose zeitlich nach der oben erwähnten Kupplungspfad-Diagnose durchführbar. Die Gangsteller-Diagnose erfolgt dabei bevorzugt ausschließlich unter der Bedingung, dass in einer später beschriebenen, zeitlich vorgelagerten Kupplungspfad-Diagnose zumindest ein Kupplungspfad mit fehlerfreier Leckage erkannt ist. In diesem Fall wird der Drucksensor in dem als fehlerfrei erkannten Kupplungspfad (nachfolgend Referenz-Kupplungspfad) für die anschließende Gangsteller-Diagnose verwendet.

Für die Gangstellerpfad-Diagnose öffnet das Diagnosemodul das im Referenz-Kupplungspfad angeordnete Kupplungsventil, damit der im Referenz-Kupplungspfad angeordnete Drucksensor einen Ist-Speicherdruckverlauf erfassen kann. Zudem öffnet das Diagnosemodul ein Druckregelventil, das in einer zu den Gangstellern führenden Verbindungsleitung angeordnet ist, um eine Druckverbindung zwischen dem im Referenz-Kupplungspfad angeordneten Drucksensor und dem im Gangstellerpfad angeordneten Gangstellerventil herzustellen.

In einem ersten Diagnoseschritt erfolgt ein Diagnose-Ladebetrieb, bei der vom Drucksensor erfasste Ist-Speicherdruck bis auf einen oberen Schwellwert erhöht wird, zu dem die Lade-Hydraulikpumpe ausgeschaltet wird. Nach dem Ende des Diagnose-Ladebetriebs kann eine Auswerteeinheit einen Druckgradienten des Speicherdruckverlaufes über den Drucksensor erfassen sowie mit einem Referenz-Druckgradienten vergleichen und auswerten, ob ein fehlerfreier oder fehlerbehafteter Druckabfall (das heißt Gangsteller-Leckage) im Speicherdruckverlauf vorliegt.

In einer technischen Umsetzung kann das Hydrauliksystem mehrere zueinander parallel geschaltete Gangstellerpfade aufweisen, in denen jeweils ein Gangstellerventil angeordnet ist, das zwischen einer Sperr-Ventilstellung sowie zwei Durchfluss-Ventilstellungen verstellbar ist.

Bei einer solchen Konstellation kann die Gangstellerpfad-Diagnose im zu prüfenden Gangstellerpfad für jede der Durchfluss-Ventilstellungen separat durchgeführt und auf Fehlerfreiheit ausgewertet werden. Die Gangstellerventile in den nicht zu prüfenden Gangstellerpfaden sind dagegen allesamt in der Sperr-Ventilstellung geschaltet, um die Meßgenauigkeit am zu prüfenden Gangstellerpfad zu erhöhen.

Die oben erwähnte Erfassung des Druckgradienten im Speicherdruckverlauf erfolgt innerhalb eines Messzeitintervalls. Dessen Startzeitpunkt liegt bevorzugt unmittelbar nach dem Ende des Diagnose-Ladebetriebs. Während der Messung des Druckgradienten erfolgt zudem auch eine Erfassung des Ist-Speicherdrucks zum Startzeitpunkt und zum Mess-Endzeitpunkt des Messzeitintervalls. Mittels dieser beiden Absolut-Druckwerte kann das Diagnosemodul dann eine fehlerfreie Diagnose erkennen, wenn eine ausreichend große Speicherdruckdifferenz zwischen dem Start- und Endzeitpunkt vorliegt.

Der Druckspeicher des Hydrauliksystems kann als eine Kolben-Zylinder-Einheit aufgebaut sein, die eine mit dem Kupplungspfad verbundene Ölkammer und einen vorgespannten Druckkolben aufweist, an dem ein Vorspanndruck anliegt. Die Vorspannung wird beispielhaft durch einen Gasdruck oder alternativ durch eine Feder erzielt. Bei vollständig entleerter Ölkammer wird der Druckkolben mit einer Vorspannkraft gegen einen mechanischen Anschlag im Druckspeicher gedrückt. Bei einem solchen vollkommen entleerten Zustand wird der Kupplungspfad nicht druckbeaufschlagt. Vielmehr herrscht in diesem Fall im Kupplungspfad ein Umgebungsdruck vor. Eine Fehlfunktion des Druckspeichers ist im Stand der Technik nur mit aufwendiger Sensorik erkennbar, beispielhaft eine Gasdruck-Reduzierung aufgrund von Gasleckage.

Die Gangstellerpfad-Diagnose kann bevorzugt als eine Folge-Diagnose zeitlich nach einer Vorspanndruck-Diagnose und/oder einer Kupplungspfad-Diagnose erfolgen.

Vor diesem Hintergrund kann bevorzugt mit dem Diagnosemodul der Vorspanndruck des Druckspeichers geprüft werden. Hierzu sind in dem Diagnosemodul zumindest ein oder mehrere Referenzwerte hinterlegt, die einen zeitlichen Referenz-Speicherdruckverlauf während eines Ladevorgangs wiedergeben. Für die Druckspeicher-Diagnose erfolgt ein Ladebetrieb, bei dem das im Kupplungspfad angeordnete Kupplungsventil durchgängig geöffnet wird, damit der Drucksensor einen zeitlichen Ist-Speicherdruckverlauf während des Ladebetriebs erfassen kann. Zur Auswertung des zeitlichen Ist-Speicherdruckverlaufes weist das Diagnosemodul eine Auswerteeinheit auf, mit der ein Druckspeicher-Fehlerfall erkennbar ist, sofern eine signifikante Abweichung zwischen dem Referenz-Speicherdruckverlauf und dem Ist-Speicherdruckverlauf vorliegt.

Für die Druckspeicher-Diagnose erfolgt der Ladebetrieb bei konstanter Ladedrehzahl der Hydraulik-Ladepumpe. Auf diese Weise wird der Kupplungspfad mit Hydraulikflüssigkeit gefüllt, und zwar bis zu einem Vorspanndruck-Zeitpunkt, zu dem der von dem Drucksensor erfasste Hydraulikdruck (d.h. der Ist-Speicherdruck) so groß ist wie der (Ist- )Vorspanndruck des Druckspeichers. Im weiteren Verlauf des Ladevorgangs wird ab dem Vorspanndruck-Zeitpunkt die Ölkammer des Druckspeichers gefüllt, und zwar unter Verstellung des Druckkolbens sowie unter weiterer Erhöhung des Ist-Speicherdrucks.

Bei einem solchen Ladevorgang ergibt sich eine charakteristische Zeit-Ladekurve. Diese kann zwischen einem Diagnose-Startzeitpunkt, zu dem die Druckspeicher-Ölkammer vollständig entleert ist, und dem oben erwähnten Oberer Schwellwert verlaufen und für die Druckspeicher-Diagnose nutzbar sein: So weist die Zeit-Ladekurve (d.h. der Ist-Speicherdruckverlauf) bis zum Erreichen des Vorspanndruck-Zeitpunktes einen steilen Druckgradienten und nach dem Vorspanndruck-Zeitpunkt einen demgegenüber stark reduzierten Druckgradienten auf. Bei einer einwandfreien Druckspeicher-Funktion stimmt der im Vorspanndruck-Zeitpunkt erfasste Ist-Vorspanndruck mit der konstruktiven Auslegung des Druckspeicher-Vorspanndrucks überein, der unter Berücksichtigung der starken Temperaturabhängigkeit in dem Diagnosemodul hinterlegt ist.

In der Auswerteeinheit des Diagnosemoduls wird der vom Drucksensor zum Vorspanndruck-Zeitpunkt erfasste Ist-Speicherdruck mit dem vordefinierten Referenz-Vorspanndruck des Druckspeichers verglichen. Bei einer signifikanten Abweichung zwischen beiden Werten wird ein nicht plausibler Vorspanndruck im Druckspeicher festgestellt.

Wie bereits oben erwähnt, erfolgt der Diagnosestart unter der Diagnose-Startbedingung, dass die Ölkammer des Druckspeichers vollständig entleert ist und im Hydrauliksystem ein Umgebungsdruck vorherrscht. Zum Erreichen dieser Diagnosestart-Bedingung wird vorab zumindest ein Hydraulikzylinder der Kupplung und/oder der Gangsteller so lange betätigt, bis aufgrund der mit der Hydraulikzylinder-Betätigung verbundenen Hydraulikflüssigkeits-Entnahme der vom Drucksensor erfasste Ist-Speicherdruck bis auf den Umgebungsdruck reduziert ist. In diesem Fall ist auch automatisch die Druckspeicher-Ölkammer vollständig entleert.

Zur Ermittlung des Vorspanndruck-Zeitpunkts kann die Auswerteeinheit die zeitlichen Druckgradienten vor und nach dem Vorspanndruck-Zeitpunkt auswerten und miteinander vergleichen sowie daraus den Vorspanndruck-Zeitpunkt ermitteln oder bestimmen, ob ein Druckspeicher-Fehler vorliegt oder nicht.

Bei einem Doppelkupplungsgetriebe liegen zwei Kupplungen vor, die jeweils über im Wesentlichen identische Kupplungspfade mit dem Druckspeicher verbunden sind. In diesem Fall kann die oben erläuterte Druckspeicher-Diagnose doppelt ausgeführt werden, und zwar im Rahmen einer ersten Teildiagnose mit dem im ersten Kupplungspfad angeordneten Drucksensor sowie mit dem im zweiten Kupplungspfad geschlossenen Kupplungsventil, und im Rahmen einer zweiten Teildiagnose mit dem im zweiten Kupplungspfad angeordneten Drucksensor sowie mit dem im ersten Kupplungspfad geschlossenen Kupplungsventil. In der Auswerteeinheit werden für ein Plausibilitätsprüfung der Druckspeicher-Diagnose die erste und die zweite Teildiagnose miteinander verglichen. Bei Vorliegen identischer Druckspeicher-Fehler sowohl in der ersten als auch in der zweiten Teildiagnose erkennt die Auswerteeinheit einen Druckspeicher-Fehler. Im Unterschied dazu erkennt die Auswerteeinheit bei Vorliegen unterschiedlicher Fehler-Ergebnisse in den beiden Teildiagnosen einen Fehler (d.h. z.B. eine Leckage) in einem der beiden Kupplungspfade.

In einer weiteren Ausführungsform kann das Diagnosemodul zusätzlich eine eigene Kupplungspfad-Diagnose durchführen, die als eine Folge-Diagnose zeitlich unmittelbar an die Vorspanndruck-Diagnose anschließt. Für die Kupplungspfad-Diagnose wird der während der Vorspanndruck-Diagnose durchgeführte Diagnose-Ladebetrieb bis zum Erreichen eines maximalen Speicherdruckes (d.h. dem Oberer Schwellwert) fortgesetzt und dort zu einem Ausschalt-Zeitpunkt beendet. Die Auswerteeinheit vergleicht nach dem Ladebetrieb-Ende den weiteren Ist-Speicherdruckverlauf mit hinterlegten Referenzwerten und wertet aus, ob ein fehlerfreier oder einer fehlerbehafteter, leckagebedingter Druckabfall im (vom Drucksensor erfassten) Speicherdruckverlauf vorliegt.

Bevorzugt ist es, wenn die obige Kupplungspfad-Diagnose nur dann durchgeführt wird, sofern ein fehlerfreier Vorspanndruck im Druckspeicher sichergestellt ist. Bevorzugt kann somit die Kupplungspfad-Diagnose im Diagnosemodul nur unter der Bedingung durchgeführt werden, dass bei der Vorspanndruck-Diagnose ein fehlerfreier Druckspeicher-Vorspanndruck vorliegt.

Die Erfindung und ihre vorteilhaften Aus- und Weiterbildungen sowie deren Vorteile werden nachfolgend anhand von Zeichnungen näher erläutert.

Es zeigen:
- Figur 1: ein Blockschaltdiagramm eines Doppelkupplungsgetriebes für ein Kraftfahrzeug mit sieben Vorwärtsgängen sowie einem Rückwärtsgang;
- Figur 2a und 2b: ein Hydrauliksystem eines Doppelkupplungsgetriebes in einem Blockschaltbild sowie grob schematisch den Aufbau eines Druckspeichers;
- Figur 3: in einem Blockschaltbild die Programmbausteine zur Druckspeicher- und Kupplungspfad-Diagnose in einem Diagnosemodul; und
- Figur 4: Diagramme, die die Druckspeicher- und Kupplungspfad-Diagnose veranschaulichen;
- Figur 5: in einem Blockschaltbild die zur Gangstellerpfad-Diagnose erforderlichen Programmbausteine in dem Diagnosemodul;
- Figur 6: Diagramme, die die Gangstellerpfad-Diagnose veranschaulichen;
- Figur 7: in einem Blockschaltbild die zur Speichervolumen-Diagnose erforderlichen Programmbausteine in dem Diagnosemodul;
- Figur 8: Diagramme, die die Speichervolumen-Diagnose veranschaulichen;
- Figur 9: in einem Blockschaltdiagramm die zur Umschaltzeitpunkt-Diagnose erforderlichen Programmbausteine in dem Diagnosemodul;
- Figur 10: in einem Blockschaltbild die zur Ventilspreizung-Diagnose erforderlichen Programmbausteine in dem Diagnosemodul;
- Figur 11: Diagramme, die die zeitlichen Verläufe während der Umschaltzeitpunkt-Diagnose und während der Ventilspreizung-Diagnose veranschaulichen;
- Figur 12: in einem Blockschaltdiagramm die zur Sicherheitsventil-Diagnose erforderlichen Programmbausteine in dem Diagnosemodul;
- Figur 13: Diagramme, die die zeitlichen Verläufe relevanter Parameter während der Sicherheitsventil-Diagnose veranschaulichen;
- Figur 14: in einem Blockschaltdiagramm die zur Fördervolumenstrom-Diagnose erforderlichen Programmbausteine in dem Diagnosemodul;
- Figur 15: Diagramme, die die zeitlichen Verläufe während der Fördervolumenstrom-Diagnose veranschaulichen; und
- Figur 16: eine Analyseeinheit, in die die in den Fehlerspeichern generierten Fehlersignale auslesbar sind.

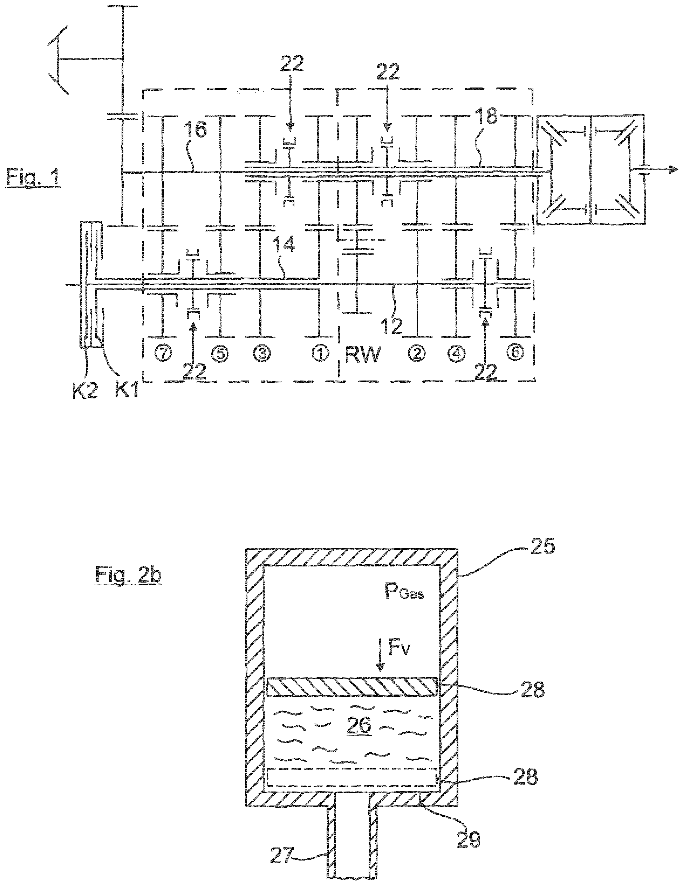

In der Fig. 1 ist in einer Prinzipdarstellung ein Doppelkupplungsgetriebe für ein Kraftfahrzeug mit Allradantrieb gezeigt. Das Doppelkupplungsgetriebe weist sieben Vorwärtsgänge (siehe die eingekreisten Ziffern 1 bis 7) sowie einen Rückwärtsgang RW auf. Das Doppelkupplungsgetriebe ist nachfolgend nur insoweit beschrieben, als es für das Verständnis der Erfindung erforderlich ist. So weist das Doppelkupplungsgetriebe zwei Eingangswellen 12, 14 auf, die koaxial zueinander angeordnet sind und über zwei hydraulisch betätigbare Lamellenkupplungen K1, K2 alternierend mit der Antriebsquelle, zum Beispiel eine Brennkraftmaschine, verbindbar sind. Die Eingangswelle 14 ist als eine Hohlwelle ausgeführt, in der die als Vollwelle ausgebildete Eingangswelle 12 geführt ist. Die beiden Eingangswellen 12, 14 treiben über Zahnradsätze der Vorwärtsgänge sowie des Rückwärtsganges auf eine achsparallel angeordnete Abtriebswelle 16 und eine als Hohlwelle gebildete Zwischenwelle 18 ab. Die Zahnradsätze der Vorwärtsgänge 1 bis 7 weisen jeweils Festzahnräder und über hydraulisch betätigbare Gangsteller schaltbare Loszahnräder auf. Die Gangsteller können beispielhaft Doppelsynchronkupplungen sein, die jeweils aus einer Neutralstellung heraus zwei benachbarte Loszahnräder schalten können.

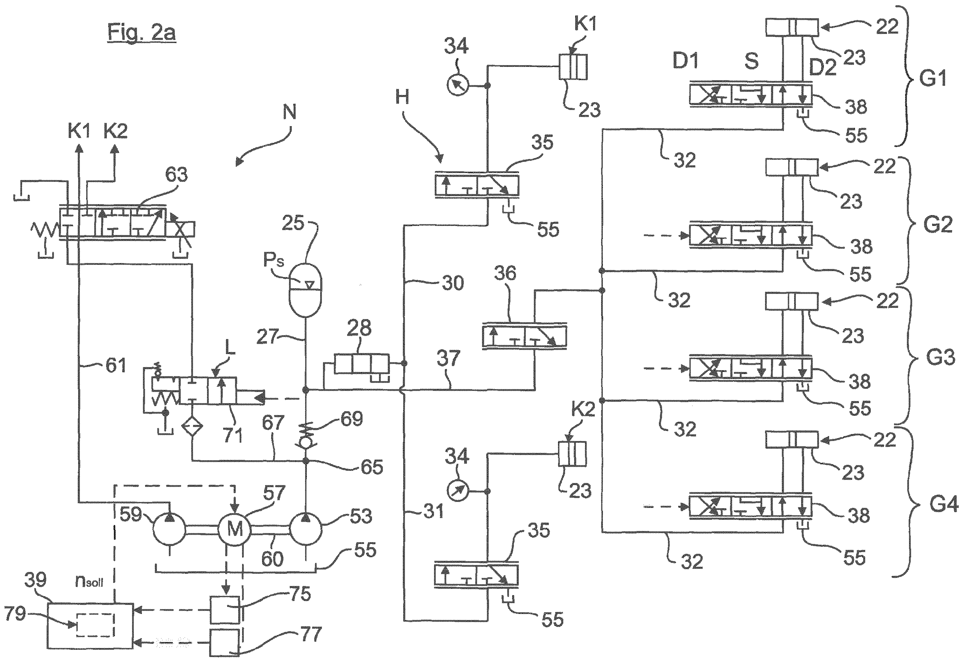

In der Fig. 2a ist das Hydrauliksystem des Doppelkupplungsgetriebes in einem stark vereinfachten Blockschaltbild dargestellt. Mit Hilfe des Hydrauliksystems werden die Hydraulikzylinder 23 der Kupplungen K1, K2 sowie die Hydraulikzylinder 22 der Gangsteller betätigt. Das Hydrauliksystem weist gemäß der Fig. 2a einen Hochdruckkreislauf H sowie einen Niederdruckkreislauf N auf. In dem Hochdruckkreislauf H können die darin geschalteten Hydraulikzylinder 22, 23 der Kupplungen K1, K2 sowie der Gangsteller über einen Druckspeicher 25 mit einem Speicherdruck ps beaufschlagt werden, der in einer Größenordnung von zum Beispiel 30 bar liegen kann. Hierzu ist eine am Druckspeicher 25 angeschlossene Hauptleitung 27 über Kupplungspfade 30, 31 zu den Kupplungs-Hydraulikzylindern 23 geführt und über Gangstellerpfade 32 zu den Gangsteller-Hydraulikzylindern 22 geführt. In den Gangsteller- und Kupplungspfaden 30, 31, 32 sind jeweils Kupplung- oder Gangstellerventile 35, 38 angeordnet. Die Kupplung- oder Gangstellerventile 35, 38 sind in nicht dargestellter Weise über eine zentrale Steuereinheit 39 ansteuerbar. Zudem ist die Steuereinheit 39 mit Drucksensoren 34 signaltechnisch in Verbindung. Die Drucksensoren 34 erfassen jeweils den an der ersten Kupplung K1 und an der zweiten Kupplung K2 anliegenden Hydraulikdruck.

Das Hydrauliksystem weist zudem eine Ladepumpe 53 auf, die eingangsseitig mit einem Ölsumpf 55 verbunden ist. Die Ladepumpe 53 ist zum Aufladen des Druckspeichers 25 über einen Elektromotor 57 von der Steuereinheit 39 ansteuerbar. Zudem ist die Ladepumpe 53 zusammen mit einer Kühlpumpe 59 auf einer gemeinsamen Antriebswelle 60 angeordnet, die vom Elektromotor 57 angetrieben wird. Die Kühlpumpe 59 ist ausgangsseitig mit einer Niederdruckleitung 61 in Verbindung, die zu einem Verteilerventil 63 führt. In Abhängigkeit von der Stellung des Verteilerventiles 63 kann bei Vorliegen von Kühlbedarf die Hydraulikflüssigkeit zur ersten und/oder zweiten Kupplung K1, K2 und anschließend in den Ölsumpf 55 rückgeführt werden.

In der Fig. 2a zweigt die Hauptleitung 27 des Hochdruckkreislaufes H an einer Verzweigungsstelle 65 in eine Bypassleitung 67 ab, die mit der Niederdruckleitung 61 des Niederdruckkreislaufes N verbunden ist. Stromab der Verzweigungsstelle 65 ist ein später beschriebenes Rückschlagventil 69 angeordnet. Zudem ist in der Bypassleitung 67 ein Speicherladeventil 71 integriert. Das Speicherladeventil 71 kann in Abhängigkeit von Höhe des Speicherdruckes ps im Hochdruckkreislauf H zwischen in der Fig. 2a gezeigten Ladestellung L und einer Kühlstellung K verstellt werden.

Der Speicherdruck ps im Hochdruckkreislauf H wirkt als ein Steuerdruck, mit dem das Speicherladeventil 71 ohne zusätzliche Fremdenergie, das heißt selbsttätig, verstellbar ist. Das Speicherladeventil 71 ist dabei so ausgelegt, dass es sich in die Ladestellung L verstellt, sofern der Speicherdruck ps im Hochdruckkreislauf H zum Beispiel einen unteren Schwellwert, zum Beispiel 25 bar, unterschreitet. Außerdem wird das Speicherladeventil 71 selbsttätig in seine Kühlstellung K verschoben, sofern der Speicherdruck ps einen oberen Schwellwert pₘₐₓ, zum Beispiel 28 bar, überschreitet.

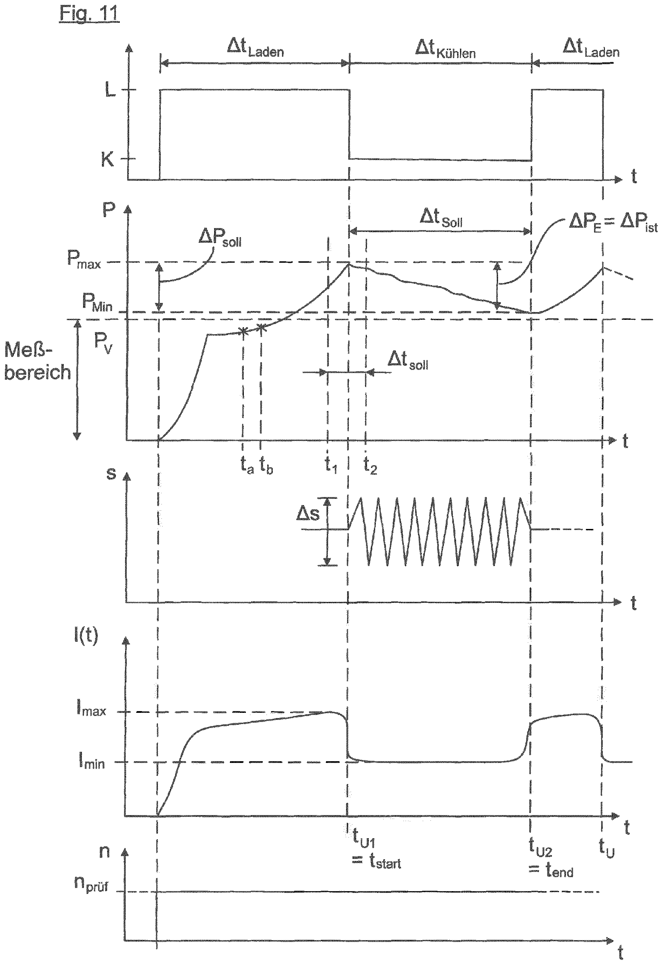

Im Fahrbetrieb kommt es durch Betätigungen der Kupplungen K1, K2 sowie der Gangsteller G1 bis G4 zu Druckverlusten. Zudem ergeben sich weitere Druckverluste durch eine Basisleckage, das heißt aufgrund von Ventilspalten oder dergleichen, im Hochdruckkreislauf H. Dadurch wird der Speicherdruck ps während des Fahrbetriebes reduziert. Für den Fall, dass der Speicherdruck ps den unteren Schwellwert pₘᵢₙ unterschreitet (das heißt es liegt ein Druckspeicher-Ladebedarf vor), verstellt sich das Speicherladeventil 71 selbsttätig in seine Ladestellung L (Fig. 2a). Bei Erkennen des Druckspeicher-Ladebedarfs steuert die Steuereinheit 39 den Elektromotor 57 mit einer Lade-Solldrehzahl an. Dadurch kann die Lade-Hydraulikpumpe 53 den Druckspeicher 25 aufladen. In einem solchen Ladebetrieb arbeitet die Lade-Hydraulikpumpe 53 unter großer Pumpenlast und daher mit entsprechend großer Ist-Stromaufnahme Iₘₐₓ (Fig. 11). Überschreitet der Speicherdruck ps den oberen Schwellwert pₘₐₓ (Fig. 11), das heißt es liegt kein Druckspeicher-Ladebedarf mehr vor, so stellt sich das Speicherladeventil 71 selbsttätig in seine Kühlstellung K. In der Kühlstellung K fördert die Lade-Hydraulikpumpe 53 über die nunmehr geöffnete Bypassleitung 67 Hydrauliköl in den Niederdruckkreislauf N. Gleichzeitig ist der Hochdruckkreislauf H über das Rückschlagventil 69 druckdicht geschlossen. Entsprechend arbeitet die Lade-Hydraulikpumpe 53 nicht mehr mit hoher, sondern mit einer reduzierten Pumpenlast sowie entsprechend geringer Ist-Stromaufnahme Iₘᵢₙ (Fig. 11).

Wie oben erwähnt, steuert die Steuereinheit 39 bei Erkennen eines Druckspeicher-Ladebedarfs den Elektromotor 57 mit einer Lade-Solldrehzahl an. Zum Erkennen eines solchen Druckspeicher-Ladebedarfs ist erfindungsgemäß auf einen Drucksensor im Hochdruckkreislauf H oder einem Lagesensor im Speicherladeventil 71 verzichtet. Anstelle dessen weist die Steuereinheit 39 eine Auswerteeinheit auf. Die Auswerteeinheit ist signaltechnisch in Verbindung mit einer in der Motoransteuerung integrierten Strommesseinrichtung 75, die eine Ist-Stromaufnahme Iᵢₛₜ des Elektromotors 57 erfasst, und mit einem Drehzahlsensor 77, der eine Ist-Drehzahl nᵢₛₜ des Elektromotors 57 erfasst.

In der Fig. 2b ist der grundsätzliche Aufbau sowie die Funktionsweise des Druckspeichers 25 ersichtlich. Demzufolge ist der Druckspeicher 25 eine Kolben-Zylinder-Einheit mit einer, mit den Hydraulikleitungen 27, 31, 32 verbundenen Ölkammer 26 und einem vorgespannten Druckkolben 28. Die Vorspannung wird hier beispielhaft durch einen Gasdruck erzielt, der am Druckkolben 28 anliegt. Alternativ kann die Vorspannung auch durch eine Feder erzielt werden. Bei vollständig entleerter Ölkammer 26 wird der Druckkolben 28 (in der Fig. 2b in gestrichelter Linie angedeutet) mit einer Vorspannkraft Fv gegen einen Anschlag 29 des Druckspeichers 25 gedrückt. Das heißt, dass bei einem Befüllvorgang zur Überwindung der Vorspannkraft Fv ein Hydraulikdruck anliegt, der größer ist als ein, mit der Vorspannkraft Fv korrelierender Vorspanndruck pᵥ

In der Fig. 2b ist der Druckspeicher 25 in einem teilbefüllten Zustand gezeigt, bei dem das Hydrauliköl unter Aufbau der Vorspannkraft Fv mit einem Speicherdruck am Druckkolben 28 anliegt. Im vollkommen entleerten Zustand werden die Hydraulikleitungen 27, 31 nicht mittels des Druckspeichers 25 druckbeaufschlagt. Vielmehr herrscht in den Hydraulikleitungen 27, 31, 32 Umgebungsdruck pu vor. Eine Betriebsbereitschaft des Automatikgetriebes ist dann gegeben, wenn sämtliche Hydraulikleitungen 27, 31, 32 mit Hydrauliköl gefüllt sind und in den Hydraulikleitungen 27, 31, 32 ein Hydraulikdruck anliegt, der größer als der Vorspanndruck pv ist, und zwar um einen vorgegebenen Druckoffset, damit die Betriebsbereitschaft nicht sofort nach Abschaltung der Ladepumpe 53 aufgrund einer Basisleckage wieder verloren geht.

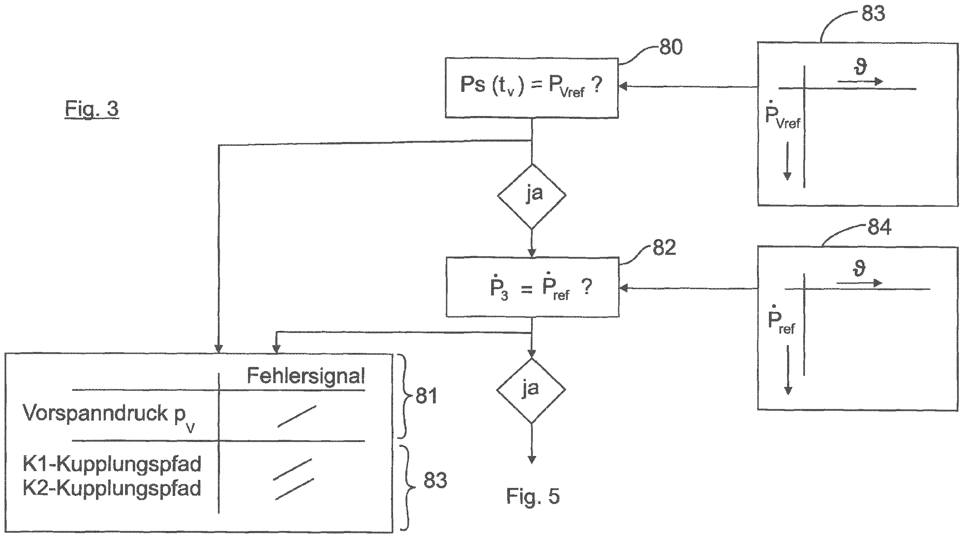

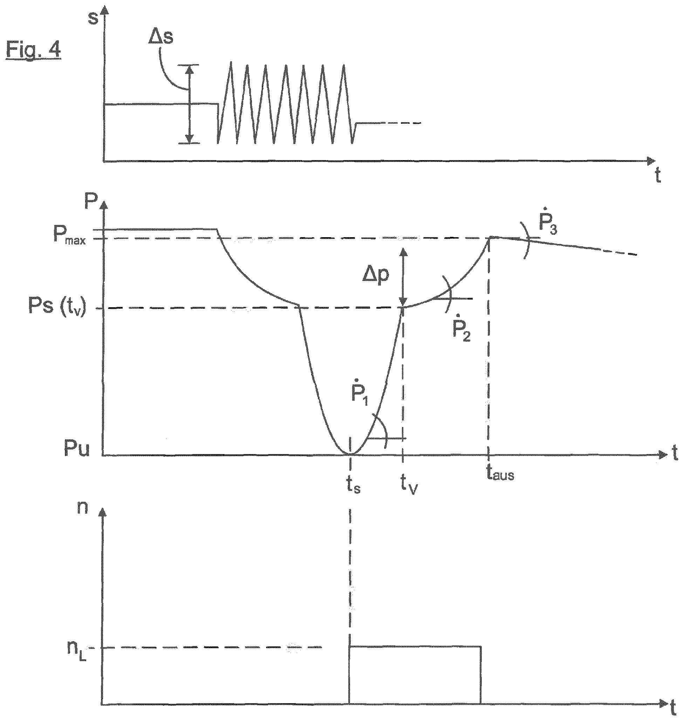

In der Figur 2a weist die Steuereinheit 39 ein Diagnosemodul 79 auf, mit dem das Ladeverhalten prüfbar ist, und zwar insbesondere der Sachverhalt prüfbar ist, ob der tatsächliche Vorspanndruck pv im Druckspeicher 25 mit einem in der Spezifikation angegebenen (d.h. konstruktiv vorgegebenen) Referenz-Vorspanndruck p_{VRef} übereinstimmt. Die hierzu erforderlichen Programmbausteinen sind in der Fig. 3 skizziert. Demnach weist das Diagnosemodul 79 eine Auswerteeinheit 80 auf, mit der ein in einem Kennfeld 83 hinterlegter temperaturabhängiger Vorspanndruck p_{VRef} mit einem später beschriebenen Ist-Speicherdruck ps(tv) (Fig. 4) verglichen wird. Der Ist-Speicherdruck ps(tv) wird zu einem später beschriebenen Vorspanndruck-Zeitpunkt tv vom Drucksensor 34 erfasst. Während des Diagnosebetriebs ist das Kupplungsventil 35 in einem der Kupplungspfade 30, 31 dauerhaft geöffnet, während das Kupplungsventil 35 im anderen Kupplungspfad geschlossen ist.

Bei einer einwandfreien Druckspeicher-Funktion stimmt der im Vorspanndruck-Zeitpunkt tv erfasste Ist-Speicherdruck ps(tv) mit dem Referenz-Vorspanndruck p_{VRef} überein. Bei einer signifikanten Vorspanndruck-Abweichung stellt dagegen die Auswerteeinheit 80 einen Vorspanndruck-Fehler fest, der in einem Vorspanndruck-Fehlerspeicher 81 (Fig. 3) hinterlegt wird. Sofern festgestellt ist, dass der Druckspeicher 25 in Ordnung ist, wird mittels einer weiteren Auswerteeinheit 82 (Fig. 3) des Diagnosemoduls 79 eine später beschriebene Kupplungspfad-Diagnose durchgeführt.

Nachfolgend wird die Druckspeicher-Diagnose (d.h. Vorspanndruck-Diagnose) und die Kupplungspfad-Diagnose anhand der Fig. 3 und 4 erläutert: So wird zur Vorbereitung der Druckspeicher-Diagnose die Ölkammer 26 des Druckspeichers 25 vollständig entleert und der Ist-Speicherdruck ps(t) im Hydrauliksystem auf einen Umgebungsdruck pu reduziert, so dass zu einem Diagnose-Startzeitpunkt ts (Fig. 4) die Druckspeicher-Diagnose beginnen kann. Die vorbeschriebene Diagnosestart-Bedingung wird durch eine Betätigung der Hydraulikzylinder 22, 23 der Kupplungen K1, K2 und der Gangsteller G1 bis G4 erzielt, wie es in dem oberen Stellweg-Diagramm der Fig. 4 angedeutet ist. Demzufolge werden die Hydraulikzylinder 22, 23 durch eine Bestromung der jeweiligen Kupplungs- oder Gangstellerventile 35, 38 solange intermittierend angesteuert, bis aufgrund der mit der Hydraulikzylinder-Betätigung verbundenen Hydraulikflüssigkeits-Entnahme der vom Drucksensor 34 erfasste Speicherdruck ps auf den Umgebungsdruck pu reduziert ist. Das Vorliegen eines solchen Umgebungsdruckes pu kann durch den Drucksensor 34 erfasst werden. Alternativ dazu kann durch Positionssensoren 93 in den Hydraulikzylindern 22, 23 ermittelt werden, ob der jeweilige Hydraulikzylinder 22, 23 noch eine Stellweg s (Fig. 4) zurücklegt oder nicht. Falls nicht, wird daraus gefolgert, dass im Hydrauliksystem ein Umgebungsdruck pu vorliegt.

Anschließend startet zum Zeitpunkt ts (Fig. 4) der Diagnose-Ladebetrieb, bei dem die Hydraulik-Ladepumpe 53 mit einer konstanten Lade-Drehzahl n_{L} (Fig. 4, unteres Diagramm) angesteuert wird. Exemplarisch wird zunächst mittels des im ersten Kupplungspfad 31 angeordneten Drucksensors 34 der Ist-Speicherdruckverlauf ps(t) erfasst, wie er in der Fig. 4, mittleres Diagramm wiedergegeben ist. Demzufolge erhöht sich der Speicherdruck ps bis zu dem Vorspanndruck-Zeitpunkt tv, bei dem der vom Drucksensor 34 erfasste Ist-Speicherdruck p_{S}(tᵥ) den Druckspeicher-Vorspanndruck pv erreicht hat.

Wie oben bereits angedeutet, ist bei einer fehlerfreien Druckspeicher-Funktion der im Vorspanndruck-Zeitpunkt tv erfasste Ist-Speicherdruck ps(tv) (unter Berücksichtigung von Temperaturabhängigkeiten) identisch mit einem Referenz-Vorspanndruck p_{VRef}. Bei einer signifikanten Abweichung zwischen dem im Vorspanndruck-Zeitpunkt tv erfassten Ist-Speicherdruck ps(tv) und dem Referenz-Vorspanndruck p_{VRef} stellt die Auswerteeinheit 80 einen Vorspanndruck-Fehler fest. Im weiteren Diagnose-Ladebetrieb wird nach dem Vorspanndruck-Zeitpunkt tv die Ölkammer 26 des Druckspeichers 25 gefüllt, und zwar unter Verstellung des Druckkolbens 28.

Wie aus der Fig. 4, mittleres Diagramm, hervorgeht, steigt im Diagnose-Ladebetrieb der Ist-Speicherdruckverlauf ps(t) bis zum Erreichen des Vorspanndrucks pv im Druckspeicher 25 (d.h. bis zum Vorspanndruck-Zeitpunkt tv) mit einem steilen Druckgradienten ṗ₁ an. Im weiteren Verlauf (d.h. nach dem Vorspanndruck-Zeitpunkt tv) steigt der Ist-Speicherdruckverlauf ps(t) dagegen lediglich mit einem flacheren Druckgradienten ṗ₂ an. Diese für den Druckspeicher 25 charakteristische Ladekurve wird zur Ermittlung des Vorspanndruck-Zeitpunkts tv wie folgt genutzt: So erfasst die Auswerteeinheit 80 die Druckgradienten ṗ₁, ṗ₂ des Ist-Speicherdruckverlaufes ps(t). Bei Erfassen einer stufenartigen Gradienten-Änderung zwischen den Druckgradienten ṗ₁ und ṗ₂ erkennt die Auswerteeinheit 80 den Vorspanndruck-Zeitpunkt tv.

Sofern in der obigen Vorspanndruck-Diagnose kein Vorspanndruck-Fehler erkannt wird, erfolgt unmittelbar anschließend die Kupplungspfad-Diagnose: Hierzu wird einfach der während der Druckspeicher-Diagnose erfolgende Diagnose-Ladebetrieb fortgesetzt, bis der Drucksensor 34 einen oberen Schwellwert pₘₐₓ (Fig. 4, mittleres Diagramm) erreicht. Der obere Schwellwert pₘₐₓ liegt in der Fig. 4, mittleres Diagramm, um eine Druckdifferenz Δp über dem Vorspanndruck pv des Druckspeichers 25. Nach dem Ende des Diagnose-Ladebetriebs vergleicht eine zweite Auswerteeinheit 82 einen Druckgradienten ṗ₃ des Ist-Speicherdruckverlauf ps(t) mit einem Referenz-Druckgradienten ṗ_{Ref}, der temperaturabhängig in einem Kennfeld 84 (Fig. 3) im Diagnosemodul 79 hinterlegt ist. Die Auswerteeinheit 82 ermittelt aus dem Vergleich, ob ein fehlerfreier oder fehlerbehafteter leckagebedingter Druckabfall im Ist-Speicherdruckverlauf ps(t) vorliegt.

Es ist hervorzuheben, dass die Kupplungspfad-Diagnose nur unter der Bedingung erfolgt, dass die Auswerteeinheit 80 keinen Vorspanndruck-Fehler feststellt. Bei Fehlerfreiheit im Druckspeicher 25 können fehlerhafte Leckagen eindeutig dem Kupplungspfad 31 zugewiesen werden. Sowohl bei der Druckspeicher-Diagnose als auch bei der Kupplungspfad-Diagnose ist das in der Verbindungsleitung 37, die die Hauptleitung 27 mit den Gangstellerpfaden 32 verbindet, angeordnete Druckregelventil 36 geschlossen.

Zur Plausibilisierung des in der Vorspanndruck-/Kupplungspfad-Diagnose erzielten Ergebnisses kann der oben anhand des ersten Kupplungspfads 31 dargelegte Diagnosebetrieb doppelt durchgeführt werden, und zwar im Rahmen einer ersten Teildiagnose A mit Hilfe des im ersten Kupplungspfad 31 angeordneten Drucksensors 34 sowie mit dem im zweiten Kupplungspfad 32 geschlossenen Kupplungsventil 35. Anschließend kann der obige Diagnosebetrieb im Rahmen einer zweiten Teildiagnose B durchgeführt werden, und zwar mit dem im zweiten Kupplungspfad 30 angeordneten Drucksensor 34 und mit dem im ersten Kupplungspfad 31 geschlossenen Kupplungsventil 35.

Das Diagnosemodul 79 kann bei Vorliegen gleicher Fehler sowohl in der ersten Teildiagnose A als auch in der zweiten Teildiagnose B einen Druckspeicher-Fehler erkennen sowie mit großer Wahrscheinlichkeit einen Kupplungspfad-Fehler ausschließen. Bei Vorliegen unterschiedlicher Fehler-Ergebnisse kann das Diagnosemodul 79 einen Leckage-Fehler in einem der beiden Kupplungspfade 30, 31 erkennen.

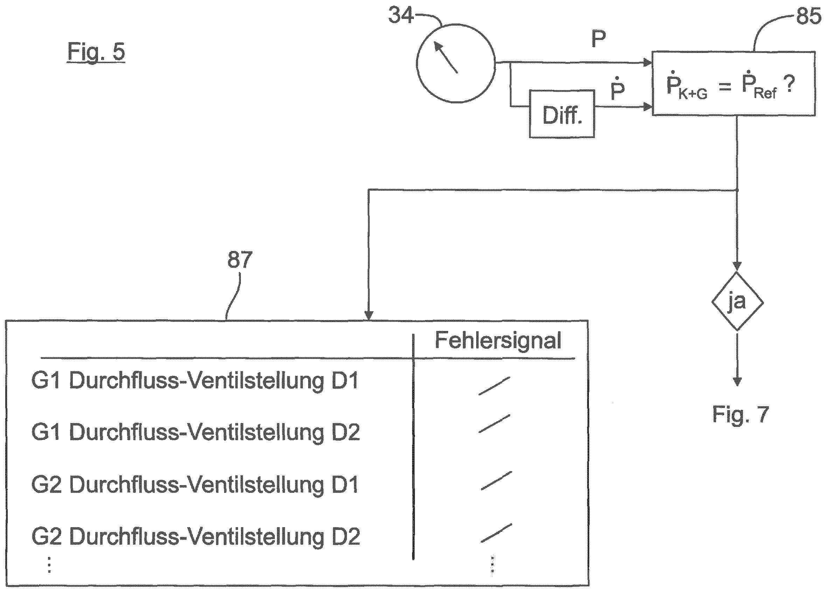

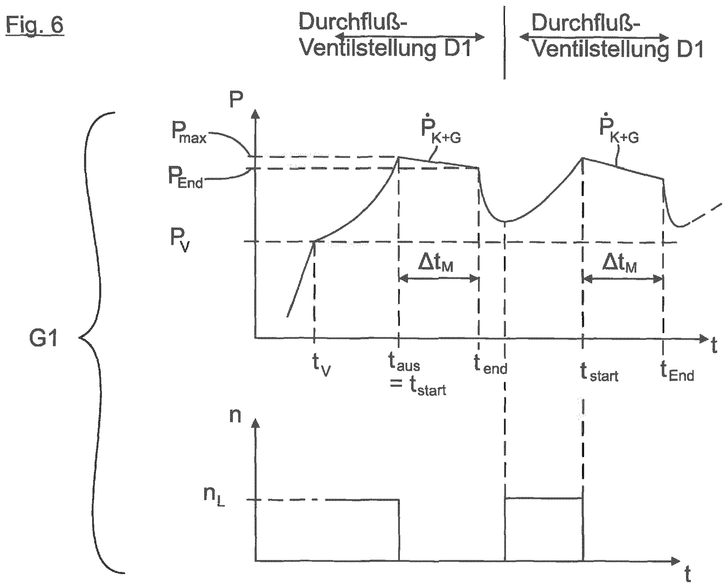

In der Figur 5 sind die für eine Gangstellerpfad-Diagnose erforderlichen Programmbausteine des Diagnosemoduls 79 in einem grob vereinfachten Blockschaltbild gezeigt. Die Gangstellerpfad-Diagnose wird als eine Folge-Diagnose zeitlich unmittelbar nach der Kupplungspfad-Diagnose (Fig. 3) durchgeführt, und zwar unter der Bedingung, dass in der Kupplungspfad-Diagnose zumindest ein Kupplungspfad 30, 31 mit fehlerfreier Leckage erkannt ist. Der Drucksensor 34 des als fehlerfrei eingestuften Kupplungspfades 30, 31 (nachfolgend als Referenz-Kupplungspfad bezeichnet) wird für die anhand der Figuren 5 und 6 veranschaulichte Gangstellerpfad-Diagnose genutzt.

Wie aus der Figur 5 hervorgeht, weist das Diagnosemodul 79 eine dritte Auswerteeinheit 85 auf, an deren Signaleingang ein vom Drucksensor 34 erfasster Ist-Speicherdruck ps(t) und ein Ist-Speicherdruck-Gradient p anliegt. Mittels der Auswerteeinheit 85 wird das Leckage-Verhalten jedes der Gangstellerpfade 32 separat geprüft. Gegebenenfalls erfasste Leckage-Fehler werden in dem Fehlerspeicher 87 hinterlegt.

Nachfolgend wird anhand der Figuren 5 und 6 die Gangstellerpfad-Diagnose beschrieben: So öffnet das Diagnosemodul 79 zunächst das im Referenz-Kupplungspfad 30 angeordnete Kupplungsventil 35, um den Ist-Speicherdruckverlauf ps(t) zu erfassen. Zudem wird das Druckregelventil 36 in der Verbindungsleitung 37 des Hydrauliksystems geöffnet, um zwischen dem im Referenz-Kupplungspfad 30 angeordneten Drucksensor 34 und den Gangstellerpfaden 32 eine Druckverbindung herzustellen. Anschließend erfolgt ein Diagnose-Ladebetrieb durch Aktivierung der Lade-Hydraulikpumpe 53. Im Diagnose-Ladebetrieb wird der Ist-Speicherdruck ps(t) bis auf den oberen Schwellwert pₘₐₓ (Figur 6) zum End-Zeitpunkt tₐᵤₛ erhöht. Nach dem Ende des Diagnose-Ladebetriebs, das heißt zum End-Zeitpunkt tₐᵤₛ (Figur 6), erfasst der Drucksensor 34 während eines Meßzeitintervalls Δt_{M} einen Druckgradienten ṗ_{K+G} des Speicherdruckverlaufes ps(t). Die Auswerteeinheit 85 vergleicht den Druckgradienten ṗ_{K+G} mit einem Referenz-Druckgradienten ṗ_{Ref} und wertet aus, ob ein fehlerfreier oder fehlerbehafteter Druckabfall (das heißt eine Gangsteller-Leckage) im Speicherdruckverlauf ps(t) vorliegt.

Wie in der Figur 2a gezeigt, ist jedes der in den Gangstellerpfaden 32 angeordneten Gangstellerventile 38 zwischen einer Sperr-Ventilstellung S und zwei Durchfluss-Ventilstellungen D1, D2 verstellbar. Die Gangstellerpfad-Diagnose erfolgt im zu prüfenden Gangstellerpfad 32 für jede der Durchfluss-Ventilstellungen D1 und D2 separat. Das heißt, dass in jedem Gangstellerpfad 32 die Gangsteller-Diagnose sowohl in der ersten Durchfluss-Ventilstellung D1 des Gangstellerventils 38 als auch in der zweiten Durchfluss-Ventilstellung D2 des Gangstellerventils 38 durchgeführt wird. Die Gangstellerventile 38 in den verbleibenden Gangstellerpfaden 32 bleiben dagegen in die Sperr-Ventilstellung S geschaltet, um die Meßgenauigkeit bei der Diagnose des zu prüfenden Gangstellerpfads 32zu erhöhen. Der im Meßzeitintervall Δt_{M} vom Drucksensor 34 erfasste Druckgradient ṗ_{K+G} gibt daher den gemeinsamen Druckabbau sowohl im Referenz-Kupplungspfad 30 als auch im zu prüfenden Gangstellerpfad 32 wieder, dessen Gangstellerventil 38 in eine der beiden Durchflußstellungen D1, D2 geschaltet ist.

Der Referenz-Druckgradient ṗ_{Ref} wird aus einer Kennfeld-Datenbank gelesen, z.B. aus der bereits in der Figur 3 gezeigten Kennfeld-Datenbank 83. In diesem Fall würde der auslesbare Referenz-Druckgradient ṗ_{Ref} einer fehlerfreien Basisleckage des Referenz-Kupplungspfades 30 entsprechen. In der Auswerteeinheit 85 werden nicht nur die Druckgradienten ṗ_{K+G} erfasst, sondern zusätzlich auch Absolut-Druckwerte, das heißt der Ist-Speicherdruck ps(tstart) zum Startzeitpunkt tstart als auch der Ist-Speicherdruck p_{S}(t_{End}) zum Mess-Endzeitpunkt t_{End} des Messzeitintervalls Δt_{M}. In diesem Fall erkennt die Auswerteeinheit 85 einen fehlerfreien Gangstellerpfad 32, wenn die Bedingungen erfüllt sind, dass erstens eine ausreichend große Speicherdruckdifferenz zwischen dem Start- und Endzeitpunkt t_{Start}, t_{End} vorliegt und dass zweitens der Druckgradient ṗ_{K+G} dem Referenz-Druckgradienten ṗ_{Ref} entspricht.

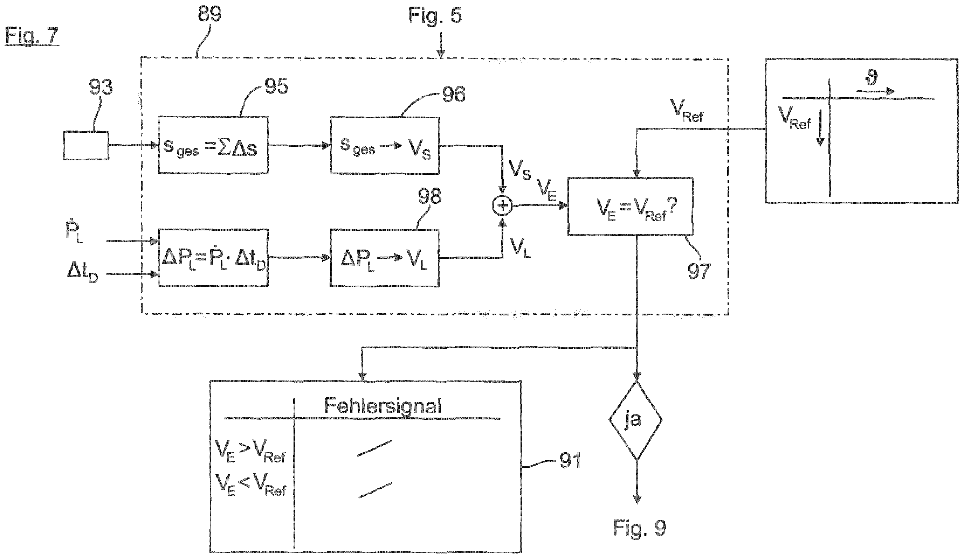

In der Figur 7 sind die für eine Speichervolumen-Diagnose erforderlichen Programmbausteine des Diagnosemoduls 79 in einem grob vereinfachten Blockschaltbild gezeigt. Die Speichervolumen-Diagnose wird als eine Folge-Diagnose zeitlich unmittelbar nach der Gangsteller-Diagnose (Figuren 5 und 6) durchgeführt, und zwar unter der Bedingung, dass in der Gangsteller-Diagnose zumindest ein Gangstellerpfad 32 der Gangsteller G1 bis G4 als fehlerfrei erkannt ist und somit für die Speichervolumen-Diagnose als ein Referenz-Gangstellerpfad nutzbar ist.

Wie aus der Figur 7 hervorgeht, weist das Diagnosemodul 79 eine Auswerteeinheit 89 auf, die in einem Vergleicher-Baustein 97 eine bei der Speichervolumen-Diagnose ermittelte Hydraulikflüssigkeits-Entnahme V_{E} mit einem Referenz-Speichervolumen V_{ref} vergleicht. Bei Vorliegen einer signifikanten Abweichung wird ein Speichervolumen-Fehler erkannt und im Fehlerspeicher 91 abgespeichert. Das Referenz-Speichervolumen V_{ref} ist aus einem Speichervolumen-Kennfeld einer Datenbank auslesbar, in dem die Referenzwerte temperaturabhängig hinterlegt sind.

Wie aus der Figur 7 weiter hervorgeht, ist die Auswerteeinheit 89 in Signalverbindung mit einem Positionssensor 93 des im Referenz-Gangstellerpfad 32 angeordneten Gangsteller-Hydraulikzylinders 22. Während der Speichervolumen-Diagnose wird das Gangstellerventil 38 im Referenz-Gangstellerpfad 32 angesteuert, wobei der Positionssensor 93 die Stellwege Δs des Gangsteller-Hydraulikzylinders 22 erfasst. Diese werden in einem Stellweg-Integrator 95 zu einem Gesamt-Stellweg s_{ges} aufintegriert. Der Gesamt-Stellweg s_{ges} wird in einem Wandler-Baustein 96 in ein Gesamt-Schluckvolumen Vs umgerechnet. Zu dem Gesamt-Schluckvolumen Vs wird ein während der Speichervolumen-Diagnose abfließendes Hydraulikflüssigkeits-Leckagevolumen V_{L} addiert. Die sich daraus ergebende Hydraulikflüssigkeits-Entnahme V_{E} wird zum oben erwähnten Vergleicher-Baustein 97 geleitet.

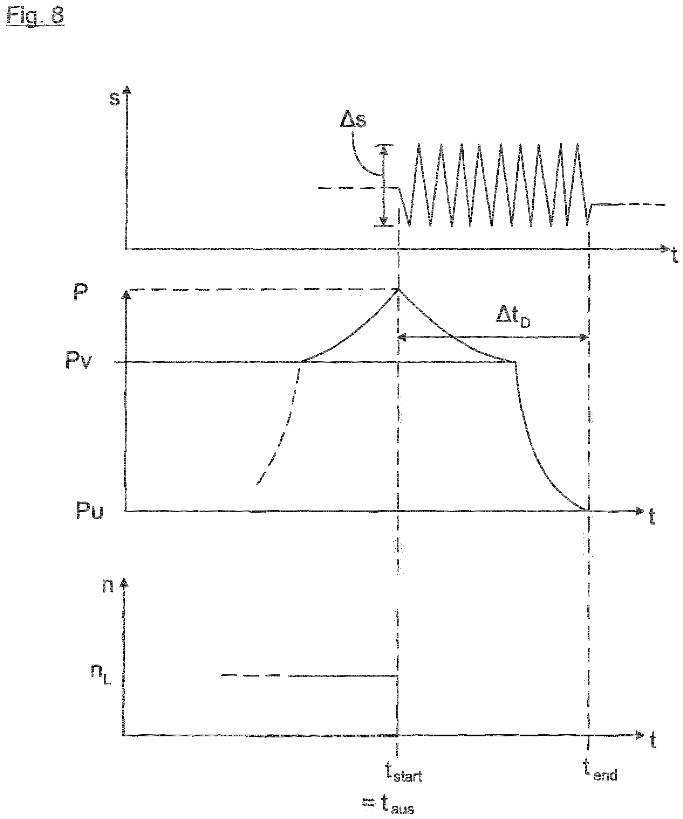

Die Speichervolumen-Diagnose wird wie folgt durchgeführt: Zunächst wird der Druckspeicher 25 in einem Diagnose-Ladebetrieb komplett mit Hydraulikflüssigkeit gefüllt. Der Diagnose-Ladebetrieb ist ein Blindladevorgang, der in einer bestimmten Zeit t erfolgt. Anschließend wird ab einem Start-Zeitpunkt tₛₜₐᵣₜ (stimmt in der Fig. 8 mit dem Ausschalt-Zeitpunkt tₐᵤₛ überein) der Referenz-Hydraulikzylinder 22 in einem Diagnose-Zeitintervall Δt_{D} so lange intermittierend betätigt, bis aufgrund der aus dem Hydrauliksystem genommenen Leckage- und Schluckvolumina V_{L} und Vs ein Umgebungsdruck pu im Hydrauliksystem vorliegt. Der Umgebungsdruck pu wird nicht über einen Drucksensor gemessen, sondern indirekt im Diagnosemodul 79 erkannt, und zwar zu dem End-Zeitpunkt t_{end} (Fig. 8) des Diagnose-Zeitintervall Δt_{D}, zu dem der Positionssensor 93 trotz Durchfluss-Ventilstellung D1, D2 des Referenz-Steuerventils 35 keinen Stellweg Δs mehr erfasst wird.

Während der Druckspeichervolumen-Diagnose ist einer der Kupplungspfade 30, 31 als Referenz-Kupplungspfad sowie der zum Referenz-Hydraulikzylinder 22 führende Referenz-Gangstellerpfad 32 mit dem im Hydrauliksystem vorherrschenden Speicherdruck ps beaufschlagt. Die Hydraulikzylinder 22 der anderen Gangstellerpfade 32 sowie des anderen Kupplungspfads sind dagegen vom Speicherdruck ps entkoppelt.

Die Ermittlung des Leckagevolumens V_{L} kann auf der Grundlage der bei den vorangegangenen Diagnosen erfassten Druckgradienten am Kupplungspfad 30 sowie am Referenz-Gangsteller 22 erfolgen (z.B. der Druckgradient ṗ_{K+G} aus der Gangstellerpfad-Diagnose gemäß den Fig. 5 und 6). Der Druckgradient ṗ_{L} wird in der Auswerteeinheit 89 mit dem Diagnose-Zeitintervall Δt_{D} multipliziert. Die so erhaltene Druckdifferenz Δp_{L} wird in einem Wandler 98 in das Leckagevolumen V_{L} umgewandelt.

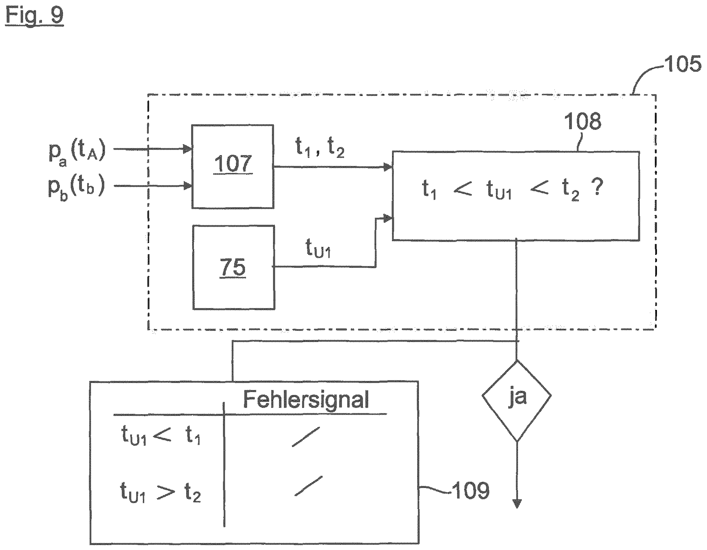

In der Figur 9 sind die für eine Umschaltzeitpunkt-Diagnose am Speicherladeventil 71 erforderlichen Programmbausteine des Diagnosemoduls 79 in einem grob vereinfachten Blockschaltbild gezeigt. Die Umschaltzeitpunkt-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 9 hervorgeht, weist das Diagnosemodul 79 eine Auswerteinheit 105 auf, mit der im Rahmen der Umschaltzeitpunkt-Diagnose geprüft wird, ob ein erster Umschaltzeitpunkt t_{U1}, zu dem das Speicherladeventil 71 selbsttätig von seiner Ladestellung L in seine Nichtladestellung K schaltet, sowie ein zweiter Umschaltzeitpunkt t_{U2}, zu dem das Speicherladeventil 71 selbsttätig von seiner Nichtladestellung K in seine Ladestellung schaltet, plausibel ist. Hierzu ermittelt die Auswerteeinheit 105, ob zum ersten Umschaltzeitpunkt t_{U1} der Ist-Speicherdruck ps(t) im Bereich des oberen Druckschwellwertes pₘₐₓ liegt. Zudem ermittelt die Auswerteeinheit 105, ob der zum zweiten Umschaltzeitpunkt t_{U2} der Ist-Speicherdruck ps(t) im Bereich des unteren Druckschwellwerts pₘᵢₙ liegt.

Zur Erfassung der beiden Umschaltzeitpunkt t_{U1} und t_{U2} wird die Strommesseinrichtung 75 des Elektromotors 57 genutzt. Die Strommesseinrichtung 75 erfasst eine Ist-Stromaufnahme I(t) des Elektromotors 57. Dabei legt die Steuereinheit 39 einen Wechsel-Zeitpunkt von einer hohen Stromaufnahme Iₘₐₓ zu einer niedrigen Stromaufnahme Iₘᵢₙ als ersten Umschaltzeitpunkt t_{U1} fest. Ein Wechsel-Zeitpunkt von der niedrigen Stromaufnahme Iₘᵢₙ zur hohen Stromaufnahme Iₘₐₓ wird als zweiter Umschaltzeitpunkt t_{U2} festgelegt.

Zur Erfassung des Ist-Speicherdruckes ps(t) wird der Kupplungspfad-Drucksensor 34 genutzt. Dessen Messbereich Δpₘₑₛₛ (Figur 11) liegt in der Figur 11 außerhalb, das heißt unterhalb der Druckschwellwerte pₘₐₓ und pₘᵢₙ. Eine unmittelbare Erfassung des Ist-Speicherdruckes ps zu den beiden Umschaltzeitpunkten t_{U1} und t_{U2} ist somit nicht möglich, da der Ist-Speicherdruck zu den beiden Umschaltzeitpunkten außerhalb des Messbereiches Δpₘₑₛₛ liegt.

In der Figur 9 erfolgt die Ermittlung des Ist-Speicherdruckes ps(t) zu den Umschaltzeitpunkten t_{U1} und t_{U2} durch Abschätzung, und zwar mit Hilfe eines Extrapolier-Bausteins 107. Im Extrapolier-Baustein 107 wird auf der Grundlage gemessener Druckwerte pₐ(tₐ) und p_{b}(t_{b}) im SpeicherdruckVerlauf die noch innerhalb des Drucksensor-Messbereiches (Δpₘₑₛₛ) liegen, ein Zeitfenster Δtₛₒₗₗ abgeschätzt. Innerhalb des Zeitfensters Δtₛₒₗₗ liegt bei einwandfreiem Speicherladeventil-Betrieb der erste Umschaltzeitpunkt t_{U1}. Das Zeitfenster Δtₛₒₗₗ wird in der Figur 9 und 11 durch die beiden Zeitpunkte t₁ und t₂ begrenzt. Im nachgeschalteten Vergleicherbaustein 108 wird ermittelt, ob der erste Umschaltzeitpunkt t_{U1} innerhalb oder außerhalb des Zeitfensters Δtₛₒₗₗ liegt. Sofern der erste Umschaltzeitpunkt t_{U1} außerhalb des Zeitfensters Δtₛₒₗₗ liegt, wird ein Fehlerfall erkannt und dieser in dem Fehlerspeicher 109 hinterlegt.

In der Figur 9 ist in den Programmbausteinen lediglich eine Teildiagnose gezeigt, bei der geprüft wird, ob der erste Umschaltzeitpunkt t_{U1} im Zeitfenster Δtₛₒₗₗ liegt oder nicht. In gleicher Weise prüft die Auswerteeinheit 105, ob der zweite Umschaltzeitpunkt t_{U2} innerhalb eines abgeschätzten Zeitfensters liegt oder nicht.

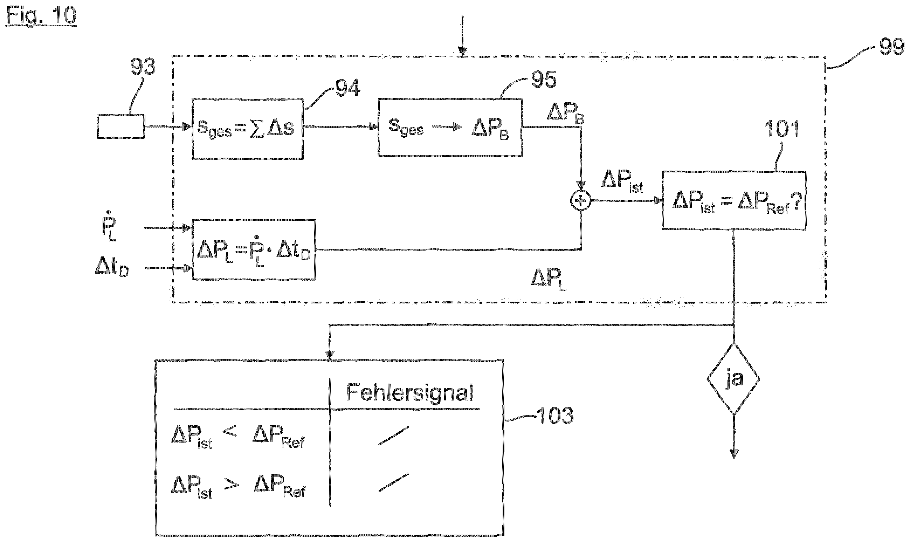

In der Figur 10 sind die für eine Ventilspreizung-Diagnose erforderlichen Programmbausteine des Diagnosemoduls 79 in einem grob vereinfachten Blockschaltbild gezeigt. Die Ventilspreizung-Diagnose wird als eine Folge-Diagnose zeitlich unmittelbar nach der Umschaltzeitpunkt-Diagnose (Figur 9) durchgeführt, und zwar unter der Bedingung, dass in der Umschaltzeitpunkt-Diagnose zumindest ein plausibler Umschaltzeitpunkt t_{U1} des Ladespeicherventils 71 erkannt worden ist.

Das Diagnosemodul 79 weist in der Fig. 10 eine Auswerteeinheit 99 auf, die bei der Ventilspreizung-Diagnose eine Ist-Ventilspreizung Δpᵢₛₜ zwischen dem unteren und dem oberen Druckschwellwert pₘᵢₙ und pₘₐₓ ermittelt. Ein Vergleicherbaustein 101 der Auswerteeinheit 99 vergleicht die Ist-Ventilspreizung Δpᵢₛₜ mit einer Soll-Ventilspreizung Δp_{Ref}. Bei Vorliegen einer signifikanten Abweichung wird ein Fehlerfall erkannt und in dem Fehlerspeicher 103 hinterlegt.

Zur Ermittlung der Ist-Ventilspreizung Δpᵢₛₜ legt die Auswerteeinheit 99 ein Diagnosezeitintervall Δt_{D} fest. Das Diagnosezeitintervall Δt_{D} startet mit dem ersten Umschaltzeitpunkt t_{U1} und endet mit dem folgenden zweiten Umschaltzeitpunkt t_{U2}. Innerhalb des oben definierten Diagnosezeitintervalls Δt_{D} aktiviert das Diagnosemodul 79 einen Referenz-Hydraulikzylinder 22, der gemäß der Figur 11 während des Diagnosezeitintervalls Δt_{D} permanent, d.h. intermittierend, hin- und her verstellt wird. Durch die Betätigung des Referenz-Hydraulikzylinders 22 und durch eine systemimmanente Hydrauliksystem-Leckage erfolgt während des Diagnosezeitintervalls Δt_{D} eine Speicherdruck-Abnahme Δp_{E}, die der Ist-Ventilspreizung Δpᵢₛₜ entspricht.

Die Ermittlung der Speicherdruck-Abnahme Δp_{E}, das heißt der Ist-Ventilspreizung Δpᵢₛₜ, erfolgt anhand der in der Figur 10 gezeigten Programmbausteine: Demzufolge werden vom Positionssensor 93 die Kolben-Stellwege Δs während des Diagnosezeitintervalls Δt_{D} in einem Integrator 94 zu einem Gesamt-Stellweg s_{ges} aufintegriert. Daraus wird in einem Wandler-Baustein 95 die mit der Gangsteller-Betätigung verbundene Druckabnahme Δp_{B} berechnet. Die mit der Gangsteller-Betätigung verbundene Druckabnahme Δp_{B} wird in einem Summierglied mit der leckagebedingten Druckabnahme Δp_{L} addiert, woraus sich die Speicherdruck-Abnahme Δp_{E} während des Diagnosezeitintervalls Δt_{D} ergibt. Die leckagebedingte Druckabnahme Δp_{L} des Referenz-Hydraulikzylinders 22 ist bereits bei vorangegangenen Diagnosen ermittelt worden.

Wie aus der Figur 2a hervorgeht, ist den beiden Kupplungspfaden 30, 31 ein von der elektronischen Steuereinheit 39 ansteuerbares Sicherheitsventil 28 vorgeschaltet. Das Sicherheitsventil 28 kann zwischen einer Schließstellung und einer Durchflussstellung betätigt werden. In der Schließstellung sind die beiden Kupplungspfade 30, 31 vom Druckspeicher 25 druckentkoppelt. In der Durchflussstellung sind die beiden Kupplungspfade 30, 31 mit dem Speicherdruck ps beaufschlagbar. Sofern die Steuereinheit 39 eine Fehlfunktion des Kupplungsventils 35 in zumindest einem der Kupplungspfade 30, 31 erfasst, kann aus Sicherheitsgründen das Sicherheitsventil 28 in seine Schließstellung verstellt werden. Im normalen Fahrbetrieb ist das Sicherheitsventil 28 permanent in seiner Durchflussstellung.

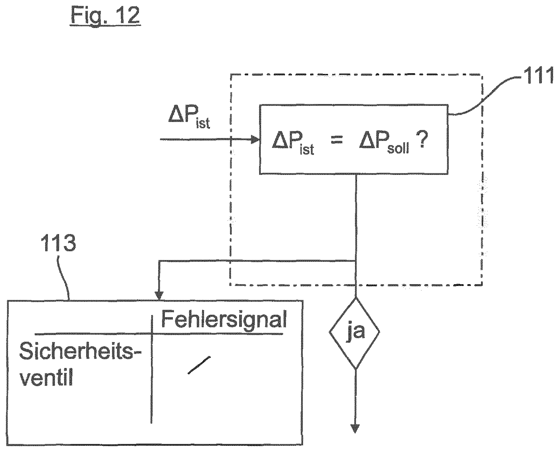

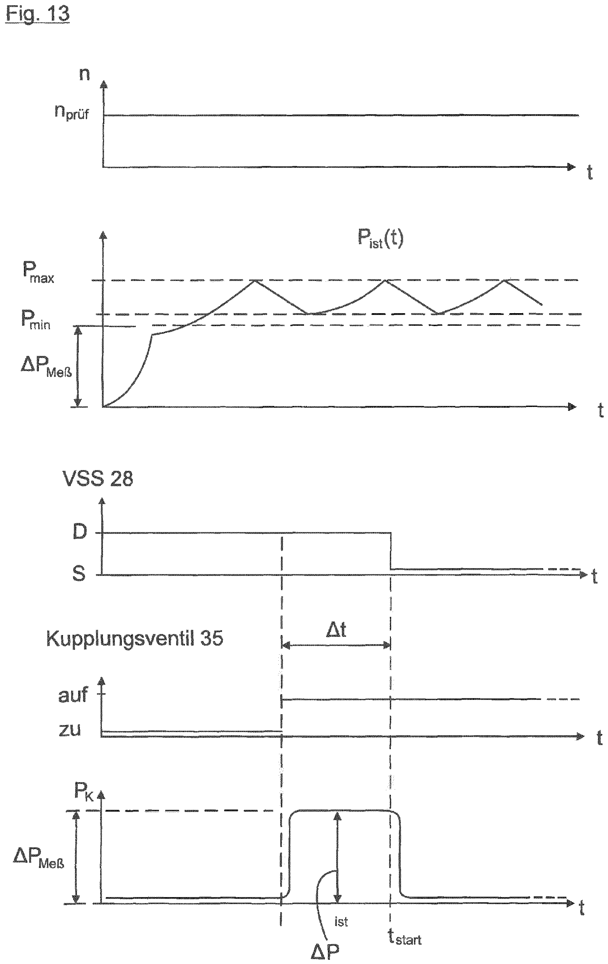

In der Figur 12 sind die für eine Sicherheitsventil-Diagnose erforderlichen Programmbausteine des Diagnosemoduls 79 in einem vereinfachten Blockschaltbild gezeigt. Die Sicherheitsventil-Diagnose kann unabhängig von anderen Diagnoseschritten durchgeführt werden. Bei der Sicherheitsventil-Diagnose wird das Sicherheitsventil 28 zu einem Diagnose-Startzeitpunkt t_{Start} (Figur 13) von der Durchflussstellung in die Schließstellung geschaltet, wodurch sich eine Ist-Druckabnahme Δpᵢₛₜ stromab des Sicherheitsventils 28 einstellt. Das Diagnosemodul 79 weist eine Auswerteeinheit 111 auf, die diese Ist-Druckabnahme Δpᵢₛₜ mit einer Soll-Druckabnahme Δpₛₒₗₗ vergleicht. Bei Vorliegen einer signifikanten Abweichung wird ein Fehlerfall erkannt und in einem Sicherheits-Fehlerspeicher 113 hinterlegt.

Zur Erfassung der Ist-Druckabnahme Δpᵢₛₜ kann der bereits oben erwähnte Kupplungs-Drucksensor 34 genutzt werden.

Nachfolgend wird anhand der Figur 12 und 13 die Durchführung der Sicherheitsventil-Diagnose erläutert: Für eine einwandfreie Meßgenauigkeit wird die Hydraulikpumpe 53 mit einer Konstantdrehzahl n_{prüf} angesteuert, um im Hochdruckkreislauf H einen ausreichend großen Speicherdruck ps zu gewährleisten, der sich gemäß der Figur 13 zwischen den oberen und unteren Druckschwellwerten pₘₐₓ und pₘᵢₙ bewegt. Das Kupplungsventil 35 eines Referenz-Kupplungspfades 30 oder 31 wird um einen Zeitversatz Δt vor dem oben erwähnten Startzeitpunkt tstart in seine Durchflussstellung verstellt, damit der Drucksensor 34 zwischen dem Kupplungsventil 35 und dem Kupplungs-Hydraulikzylinder 23 die Ist-Druckabnahme Δpᵢₛₜ erfassen kann. Während des Zeitversatzes Δt wird vom Drucksensor 34 nicht der tatsächlich am Kupplungs-Hydraulikzylinder 22 anliegende Hydraulikdruck zur Auswerteeinheit 111 (Fig. 12) ausgelesen, sondern vielmehr ein oberer Grenzdruck des Messbereiches Δpₘₑₛₛ.

Zum Diagnose-Startzeitpunkt tstart wird das Sicherheitsventil 28 von seiner Durchflussstellung D in seine Schließstellung S geschaltet. Die daraus resultierende Druckabnahme pᵢₛₜ wird vom Drucksensor 34 erfasst und in der Auswerteeinheit 111 mit der Soll-Druckabnahme verglichen.

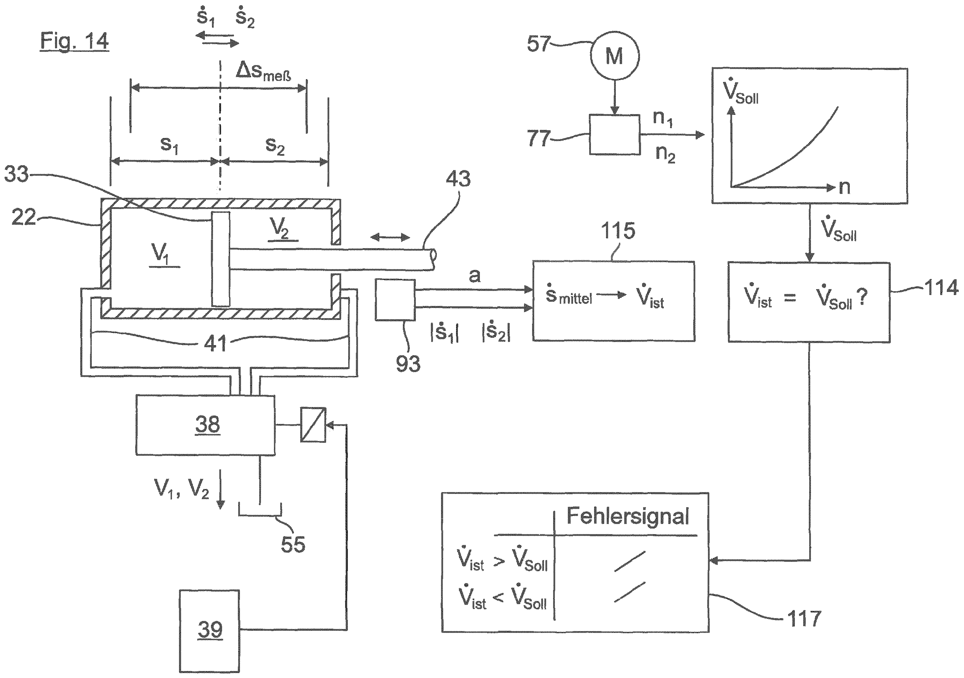

In der Figur 14 sind die für die Fördervolumenstrom-Diagnose erforderlichen Programmbausteine des Diagnosemoduls 79 in einem grob vereinfachten Blockschaltbild gezeigt. Die Fördervolumenstrom-Diagnose wird als eine Folgediagnose zeitlich unmittelbar nach der Speichervolumen-Diagnose (Figuren 7 und 8) durchgeführt, und zwar unter der Bedingung, dass in der Speichervolumen-Diagnose ein plausibles Speichervolumen des Druckspeichers 25 erkannt ist.

Wie aus der Figur 14 hervorgeht, wird für die Diagnose ein Gangsteller-Hydraulikzylinder 22 genutzt, der über den Gangsteller 32 mit dem Drucksensor 25 in Verbindung ist. Dem Gangsteller-Hydraulikzylinder 22 ist ein Gangstellerventil 38 vorgelagert, das von der Steuereinheit 39 ansteuerbar ist, um einen am Gangsteller-Hydraulikzylinder 22 anliegenden Hydraulikdruck einzustellen. Das Gangstellerventil 38 ist zwischen zwei Durchflussstellungen D1, D2 verstellbar, um einen Kolben 33 in gegenläufigen Kolbenhüben über die angedeuteten Stellwege s₁, s₂ sowie mit Kolbengeschwindigkeiten ṡ₁, ṡ₂ im Hydraulik-Stellzylinder 22 zu verlagern. Der Kolben 33 unterteilt in der Figur 14 den Hydraulikzylinder in einen kolbenstangenseitigen Arbeitsraum sowie einen davon abgewandten Arbeitsraum, die beide über Hydraulik-Steuerleitungen 41 mit dem Gangstellerventil 38 in Verbindung sind. Mittels der Kolbenstange 43 des Gangsteller-Hydraulikzylinders 22 kann ein nicht gezeigter Gangsteller G1 betätigt werden. Bei einer solchen Gangsteller-Betätigung steuert die elektronische Steuereinheit 39 das Gangstellerventil 38 in an sich bekannter Weise in eine der Durchflussstellungen D1, D2, um eine Kolbenstange-Bewegung zu erzielen. Der Kolbenhub ist mit einer Hydraulikflüssigkeits-Entnahme V₁, V₂ (Schluckvolumen) aus dem Hydrauliksystem verbunden. Aufgrund der bekannten Innengeometrie des Gangsteller-Hydraulikzylinders 22 ist das jeweilige Schluckvolumen V₁, V₂ bekannt. Zudem ist ein Positionssensor 93 vorgesehen, mit dem die Kolbengeschwindigkeit ṡ₁, ṡ₂ im jeweiligen Kolbenhub erfassbar ist.

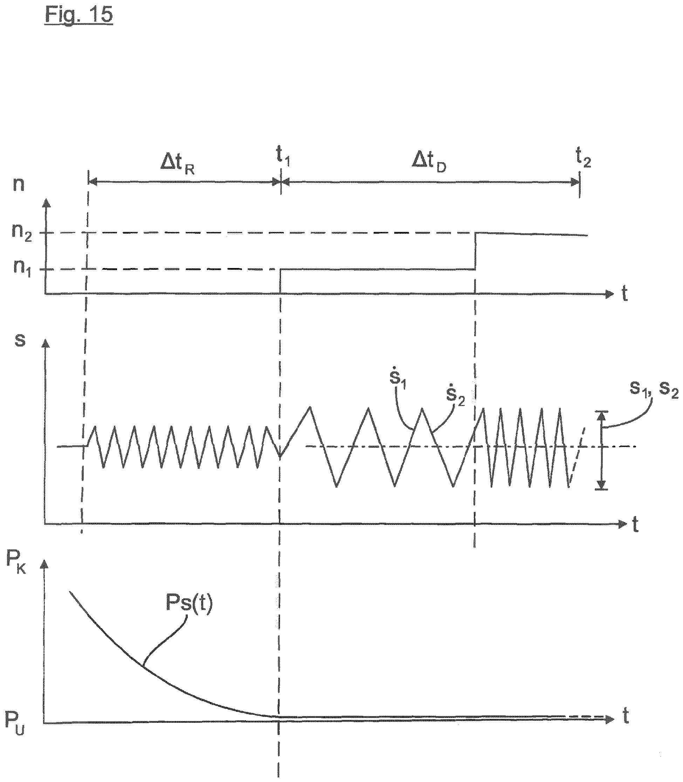

Nachfolgend wird anhand der Figuren 14 und 15 die Fördervolumenstrom-Diagnose beschrieben: So wird zunächst in einem Druckreduzier-Zeitintervall Δt_{R} (Figur 15) zunächst die Hydraulikpumpe 53 deaktiviert und gleichzeitig das Gangstellerventil 38 von der elektronischen Steuereinheit 39 intermittierend angesteuert, wie es in dem mittleren Stellweg-Diagramm der Figur 15 gezeigt ist. Im Druckreduzier-Zeitintervall Δt_{R} wird durch die Ansteuerung vom Gangstellerventil 38 der Gangsteller-Hydraulikzylinder 22 so lange hin- und herbewegt, bis aufgrund von leckagebedingter Hydraulikflüssigkeits-Entnahme und aufgrund betätigungsbedingter Hydraulikflüssigkeits-Entnahme (das heißt Schluckvolumina V₁, V₂) der Speicherdruck ps(t) bis auf den Umgebungsdruck pu reduziert ist. In diesem Zustand ist der Druckspeicher 25 vollständig entleert. Unmittelbar anschließend erfolgt der Start (tstart) eines Diagnosezeitintervalls Δt_{D}. Im Diagnosezeitintervall Δt_{D} erfolgt ein Ladebetrieb der Hydraulikpumpe 53, bei der diese mit unterschiedlichen Prüf-Drehzahlen n₁ und n₂ angesteuert werden. Gleichzeitig wird das Gangstellerventil 38 zwischen seinen Durchflussstellungen D1, D2 intermittierend verstellt. Dies führt dazu, dass sich der Kolben 33 im Gangsteller-Hydraulikzylinder 22 in gegenläufigen Kolbenhüben über Kolbenstellwege s₁, s₂ sowie mit Kolbengeschwindigkeiten ṡ₁, ṡ₂ im Gangsteller-Hydraulikzylinder 22 hin- und herverlagert.

Der Positionssensor 93 erfasst sowohl die einzelnen Stellwege s₁, s₂ je Kolbenhub sowie die Kolbengeschwindigkeiten ṡ₁, ṡ₂ je Kolbenhub. Zudem wird die Anzahl a (Fig. 14) von Kolbenhüben während des Diagnosezeitintervalls Δt_{D} erfasst. Diese Daten werden zum Signaleingang eines Wandler-Bausteins 115 geleitet, in dem eine mittlere Kolbengeschwindigkeit ṡₘᵢₜₜₑₗ aus der Anzahl a von erfassten Kolbenhüben berechnet wird. Aus der mittleren Kolbengeschwindigkeit ṡₘᵢₜₜₑₗ wird im Wandler-Baustein 115 ein Ist-Fördervolumenstrom Vᵢₛₜ berechnet. Der Ist-Fördervolumenstrom Vᵢₛₜ wird in einer signaltechnisch nachgeschalteten Auswerteeinheit 113 mit einem Soll-Fördervolumenstrom Vₛₒₗₗ verglichen, und zwar unter Berücksichtigungen der jeweiligen Prüf-Drehzahl n₁ und n₂ während des Diagnosezeitintervalls Δt_{D}. Ergibt sich in der Auswerteeinheit 113 eine signifikante Abweichung, so wird ein Fehlerfall erkannt, der in dem Fehlerspeicher 117 hinterlegt wird.

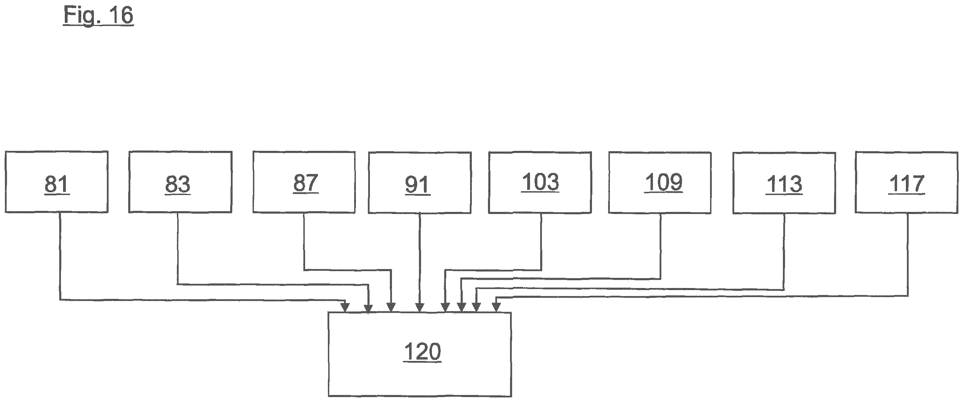

Wie aus der Fig. 16 hervorgeht, sind sämtliche Fehlerspeicher 81, 83, 87, 91, 103, 109, 117 in Signalverbindung mit einer Analyseeinheit 120, in die die in den Fehlerspeichern generierten Fehlersignale auslesbar sind. In der Analyseeinheit 120 ist eine Bewertungsmatrix hinterlegt, in der die Fehlersignale aus den Fehlerspeichern 81, 83, 87, 91, 103, 109, 117 zusammengeführt werden.

Im Hinblick auf eine umfassende Hydrauliksystem-Diagnose bewertet die Analyseeinheit 120 anhand der Bewertungsmatrix sämtliche Fehlersignale in Kombination. In der Analyseeinheit 120 erfolgt somit final eine Gegenüberstellung von Fehlersignalen mit nicht beanstandeten, d.h. fehlerfreien Funktionsdiagnosen, wodurch eine qualifizierte Bewertung der in dem Hydrauliksystem verbauten Komponenten ermöglicht ist. Die Bewertung ist ohne eine Zerlegung des Hydrauliksystems sowie ohne externe Prüfanlagen/Messtechnik ermöglicht. Auf diese Weise wird eine Verkürzung von Reparatur- und Instandsetzungszeiten, eine sichere Detektion defekter Bauteile, eine Reduzierung von Wiederholreparaturen, eine Einsparung von Analyse-Prüfstandkapazitäten durch Prüfung im verbauten Zustand (im Fahrzeug) ohne Zerlegungsaufwand möglich.

## Patentansprüche

1. Hydrauliksystem für ein Automatikgetriebe, insbesondere Doppelkupplungsgetriebe, eines Kraftfahrzeugs, mit dem Hydraulikzylinder (22, 23) zumindest einer Kupplung (K1, K2) sowie von Gangstellern (G1 bis G4) betätigbar sind, welches Hydrauliksystem einen Druckspeicher (25) zur Bereitstellung eines Speicherdrucks (pₛ) im Hydrauliksystem aufweist, wobei in einem vom Druckspeicher (25) zum Kupplungs-Hydraulikzylinder (23) führenden Kupplungspfad (30, 31) ein von der Steuereinheit (39) ansteuerbares Kupplungsventil (35) angeordnet ist, mit dem ein am Kupplungs-Hydraulikzylinder (23) anliegender Hydraulikdruck einstellbar ist, und in zumindest einem vom Druckspeicher (25) zum Gangsteller-Hydraulikzylinder (22) führenden Gangstellerpfad (32) ein von einer elektronischen Steuereinheit (39) ansteuerbares Gangstellerventil (38) angeordnet ist, mit dem der am Gangsteller-Hydraulikzylinder (22) anliegende Hydraulikdruck einstellbar ist, welcher Steuereinheit (39) ein Drucksensor (34) zugeordnet ist, mit dem der am Kupplungs-Hydraulikzylinder (23) anliegende Hydraulikdruck erfassbar ist, und mit einer Lade-Hydraulikpumpe (53), die in einem Ladevorgang Hydraulikflüssigkeit in das Hydrauliksystem fördert, um den Ist-Speicherdruck (pₛ) zu erhöhen, **dadurch gekennzeichnet, dass** die Steuereinheit (39) ein Diagnosemodul (79) aufweist, mit dem eine Gangstellerpfad-Diagnose durchführbar ist, bei der das Diagnosemodul (79) unter Nutzung des im Kupplungspfad (30, 31) angeordneten Drucksensors (34) ein Leckage-Verhalten in dem Gangstellerpfad (32) prüft und einen Fehlerfall erkennt, der in einem Gangstellerpfad-Fehlerspeicher (87) hinterlegbar ist, dass für die Gangstellerpfad-Diagnose das Diagnosemodul (79) das im Kupplungspfad (30, 31) angeordnete Kupplungsventil (35) öffnet, um mit dem Drucksensor (34) einen Ist-Speicherdruckverlauf (pₛ(t)) zu erfassen, und eine Druckverbindung zwischen dem im Gangstellerpfad (32) angeordneten Gangstellerventil (38) und dem Drucksensor (34) herstellt, insbesondere durch Öffnen eines Druckregelventils (36), und dass zur Durchführung der Gangstellerpfad-Diagnose ein Diagnose-Ladebetrieb erfolgt, bei dem der Ist-Speicherdruck (pₛ(t)) bis auf einen oberen Schwellwert (pₘₐₓ) zu einem End-Zeitpunkt (tₐᵤₛ) erhöht wird, und dass der Drucksensor (34) nach dem Ende (tₐᵤₛ) des Diagnose-Ladebetriebs einen Druckgradienten (ṗ_{K+G}) des Speicherdruckverlaufs (pₛ(t)) erfasst, und dass eine Auswerteeinheit (85) den Druckgradienten (ṗ_{K+G}) des Speicherdruckverlaufs (pₛ(t)) mit einem Referenz-Druckgradienten (ṗ_{ref}) vergleicht und auswertet, ob ein fehlerfreier oder fehlerbehafteter Druckabfall bzw. Gangsteller-Leckage im Speicherdruckverlauf (pₛ(t)) vorliegt.

2. Hydrauliksystem nach Anspruch 1, **dadurch gekennzeichnet, dass** das Gangstellerventil (38) zwischen einer Sperr-Ventilstellung (S) und zwei Durchfluss-Ventilstellungen (D1, D2) verstellbar ist, und dass die Gangstellerpfad-Diagnose mit dem Gangstellerventil (38) sowohl in seiner ersten als auch in seiner zweiten Durchfluss-Ventilstellung (D1, D2) erfolgt.

3. Hydrauliksystem nach einem der Ansprüche 1 oder 2, **dadurch gekennzeichnet, dass** zumindest ein erster und ein zweiter Gangstellerpfad (32) vorgesehen ist, und dass die Gangstellerpfad-Diagnose für jeden Gangstellerpfad (32) separat erfolgt.

4. Hydrauliksystem nach Anspruch 3, **dadurch gekennzeichnet, dass** bei einer am ersten Gangstellerpfad (32) erfolgenden Gangstellerpfad-Diagnose das im zweiten und ggf. weiteren Gangstellerpfad (32) angeordnete Gangstellerventil (38) in der Sperrstellung (S) ist.

5. Hydrauliksystem nach einem der vorhergehenden Ansprüche, **dadurch gekennzeichnet, dass** der Druckgradient (ṗ_{K+G}) im Speicherdruckverlauf (pₛ(t)) innerhalb eines Messzeitintervalls (Δt_{M}) erfasst wird, dessen Startzeitpunkt (tstart) dem Ende (tₐᵤₛ) des Diagnose-Ladebetriebs entspricht oder unmittelbar danach erfolgt, und/oder dass sowohl der Ist-Speicherdruck (p_{S}(t_{Start})) zum Mess-Startzeitpunkt (tstart) als auch der Ist-Speicherdruck (p_{S}(t_{End})) zum Mess-Endzeitpunkt (t_{Ende}) erfasst wird.

6. Hydrauliksystem nach einem der Ansprüche 1 bis 5, **dadurch gekennzeichnet, dass** die Gangstellerpfad-Diagnose als eine Folge-Diagnose zeitlich nach einer Vorspanndruck-Diagnose und/oder einer Kupplungspfad-Diagnose erfolgt, und dass die Gangstellerpfad-Diagnose nur unter der Bedingung erfolgt, dass in der Kupplungspfad-Diagnose zumindest ein Kupplungspfad (30, 31) mit fehlerfreier Leckage erkannt ist, und dass der als fehlerfrei erkannte Kupplungspfad (30, 31) als ein Referenz-Kupplungspfad für die Gangsteller-Diagnose nutzbar ist.

7. Hydrauliksystem nach einem der vorhergehenden Ansprüche, **dadurch gekennzeichnet, dass** mit dem Diagnosemodul (79) eine Vorspanndruck-Diagnose durchführbar ist, bei der das Diagnosemodul (79) unter Nutzung des in dem Kupplungspfad (30, 31) angeordneten Drucksensors (34) ein Vorspanndruck (pᵥ) des Druckspeichers (25) prüft und einen Fehlerfall erkennt, der in einem Vorspanndruck-Fehlerspeicher (81) hinterlegbar ist.

8. Hydrauliksystem nach Anspruch 7, **dadurch gekennzeichnet, dass** zur Durchführung der Vorspanndruck-Diagnose das Diagnosemodul (79) einen Ladevorgang zu einem Startzeitpunkt (ts) startet, um den Ist-Speicherdruck (pₛ) bis auf einen oberen Schwellwert (pₘₐₓ) zu erhöhen, wobei das im Kupplungspfad (30, 31) angeordnete Kupplungsventil (35) durchgängig geöffnet ist, um einen zeitlichen Ist-Speicherdruckverlauf (pₛ(t)) zu erfassen, und dass das Diagnosemodul (79) eine Auswerteeinheit (80) aufweist, die bei Vorliegen einer signifikanten Abweichung zwischen zumindest einem Referenzwert (p_{VRef}) und dem Ist-Speicherdruckverlauf (pₛ(t)) einen Fehlerfall erkennt, der in einem Vorspanndruck-Fehlerspeicher (81) hinterlegbar ist.

9. Hydrauliksystem nach Anspruch 7 oder 8, **dadurch gekennzeichnet, dass** der Druckspeicher (25) eine Kolben-Zylinder-Einheit ist, bei der eine mit dem Kupplungspfad (30, 31) verbundene Ölkammer (26) mittels eines vorgespannten Druckkolbens (27) beaufschlagt ist, und dass bei vollständig entleerter Ölkammer (26) der Druckkolben (27) mit einer Vorspannkraft (Fv) gegen einen Anschlag (29) des Druckspeichers (25) gedrückt ist und im Hydrauliksystem Umgebungsdruck (pᵤ) vorherrscht, und dass bei einem Befüll- bzw. Ladevorgang zur Überwindung der Vorspannkraft (Fv) ein Hydraulikdruck am Druckkolben (27) anzulegen ist, der größer ist als der, mit der Vorspannkraft (Fv) korrelierende, temperaturabhängige Vorspanndruck (pv).

10. Hydrauliksystem nach Anspruch 8 oder 9, **dadurch gekennzeichnet, dass** der oberer Schwellwert (pₘₐₓ) um eine Druckdifferenz größer ist als der Vorspanndruck (pᵥ) des Druckspeichers (25), und dass im Diagnose-Ladebetrieb der von dem Drucksensor (34) erfasste Ist-Speicherdruck (pₛ(t)) zu einem Vorspanndruck-Zeitpunkt (tᵥ) den Vorspanndruck (pᵥ) des Druckspeichers (25) erreicht, und dass im weiteren Diagnose-Ladebetrieb ab dem Vorspanndruck-Zeitpunkt (tᵥ) die Ölkammer (26) des Druckspeichers (25) gefüllt wird, und zwar unter Verstellung des Druckkolbens (27) sowie unter weiterer Erhöhung des Ist- Speicherdrucks (pₛ(t)).

11. Hydrauliksystem nach Anspruch 10, **dadurch gekennzeichnet, dass** die Auswerteeinheit (80) des Diagnosemoduls (79) den vom Drucksensor (34) zum Vorspanndruck-Zeitpunkt (tᵥ) erfassten Ist-Speicherdruck (pₛ(tᵥ)) mit einem vordefinierten Referenz-Vorspanndruck (p_{VRef}) des Druckspeichers (25) vergleicht, und dass bei einer einwandfreien Druckspeicher-Funktion der im Vorspanndruck-Zeitpunkt (tᵥ) erfasste Ist-Speicherdruck (pₛ(tᵥ)) mit dem Referenz-Vorspanndruck (p_{VRef}) übereinstimmt, und dass bei einer signifikanten Vorspanndruck-Abweichung die Auswerteeinheit (80) einen Vorspanndruck-Fehler feststellt.

12. Hydrauliksystem nach Anspruch 10 oder 11, **dadurch gekennzeichnet, dass** im Diagnose-Ladebetrieb der Ist-Speicherdruckverlauf (pₛ(t)) bis zum Erreichen des Vorspanndrucks (pᵥ) im Druckspeicher (25) mit einem steilen Druckgradienten (ṗ₁) ansteigt und im weiteren Verlauf der Ist-Speicherdruckverlauf (pₛ(t)) mit einem flacheren Druckgradienten (ṗ₂) ansteigt, und dass die Auswerteeinheit (80) bei Vorliegen einer signifikanten Gradienten-Änderung zwischen den beiden Druckgradienten (ṗ₁, ṗ₂) den Vorspanndruck-Zeitpunkt (tᵥ) erkennt.

## Claims

1. Hydraulic system for an automatic transmission, in particular dual clutch transmissions, of a motor vehicle, with which hydraulic cylinders (22, 23) of at least one clutch (K1, K2) and of gear selectors (G1 to G4) can be actuated, which hydraulic system has a pressure accumulator (25) for providing an accumulator pressure (pₛ) in the hydraulic system, wherein a clutch valve (35) that can be controlled by the control unit (39) is arranged in a clutch path (30, 31) leading from the pressure accumulator (25) to the clutch hydraulic cylinder (23), with which clutch valve a hydraulic pressure at the clutch hydraulic cylinder (23) can be adjusted, and a gear selector valve (38) that can be controlled by an electronic control unit (39) is arranged in at least one gear selector path (32) leading from the pressure accumulator (25) to the gear selector hydraulic cylinder (22), with which gear selector valve the hydraulic pressure at the gear selector hydraulic cylinder (22) can be adjusted, wherein a pressure sensor (34) is assigned to said control unit (39), with which the hydraulic pressure at the clutch hydraulic cylinder (23) can be detected, and comprising a charging hydraulic pump (53), which conveys hydraulic fluid into the hydraulic system in a charging process, in order to increase the actual accumulator pressure (pₛ), **characterised in that** the control unit (39) has a diagnosis module (79), with which a diagnosis of the gear selector path can be carried out, wherein the diagnosis module (79) checks a leakage behaviour in the gear selector path (32) using the pressure sensor (34) arranged in the clutch path (30, 31) and identifies a fault, which can be stored in a gear selector path fault log (87), that, for the gear selector path diagnosis, the diagnosis module (79) opens the clutch valve (35) arranged in the clutch path (30, 31), in order to detect an actual accumulator pressure curve (pₛ(t)) with the pressure sensor (34), and creates a pressure connection between the gear selector valve (38) arranged in the gear selector path (32) and the pressure sensor (34), in particular by opening a pressure control valve (36), and that, in order to carry out the gear selector path diagnosis, a diagnosis charging operation takes place, in which the actual accumulator pressure (pₛ(t)) is increased to an upper threshold (pₘₐₓ) at an end time (toff), and that the pressure sensor (34) detects a pressure gradient (P_{K+G}) of the accumulator pressure curve (pₛ(t)) after the end (t_{off}) of the diagnosis charging operation, and that an evaluation unit (85) compares the pressure gradient (P_{K+G}) of the accumulator pressure curve (pₛ(t)) with a reference pressure gradient (P_{ref}) and assesses whether there is a faultless or faulty pressure drop and/or gear selector leakage in the accumulator pressure curve (pₛ(t)).

2. Hydraulic system according to claim 1, **characterised in that** the gear selector valve (38) can be adjusted between a lock valve position (S) and two flow valve positions (D1, D2), and that the gear selector path diagnosis with the gear selector valve (38) takes place both in its first and in its second flow valve position (D1, D2).

3. Hydraulic system according to any of claims 1 or 2, **characterised in that** at least a first and a second gear selector path (32) are provided, and that the gear selector path diagnosis takes place separately for each gear selector path (32).

4. Hydraulic system according to claim 3, **characterised in that**, for a gear selector path diagnosis taking place on the first gear selector path (32), the gear selector valve (38) arranged in the second and, where applicable, further gear selector paths (32) is in the lock position (S).

5. Hydraulic system according to any of the preceding claims, **characterised in that** the pressure gradient (P_{K+G}) in the accumulator pressure curve (pₛ(t)) is detected within a measurement time interval (Δt_{M}), the start time (t_{Start}) of which corresponds to the end (t_{off}) of the diagnosis charging operation or takes place immediately thereafter, and/or that both the actual accumulator pressure (pₛ(t_{Start})) at the measurement start time (t_{Start}) and the actual accumulator pressure (pₛ(t_{End})) at the measurement end time (t_{End}) are detected.

6. Hydraulic system according to any of claims 1 to 5, **characterised in that** the gear selector path diagnosis takes place as a follow-up diagnosis chronologically after a pressurization pressure diagnosis and/or a clutch path diagnosis, and that the gear selector path diagnosis only takes place on condition that at least one clutch path (30, 31) with faultless leakage is identified in the clutch path diagnosis, and that the clutch path (30, 31) identified as faultless can be used as a reference clutch path for the gear selector diagnosis.

7. Hydraulic system according to any of the preceding claims, **characterised in that** a pressurization pressure diagnosis can be carried out with the diagnosis module (79), in which the diagnosis module (79) checks a pressurization pressure (pᵥ) of the pressure accumulator (25) using the pressure sensor (34) arranged in the clutch path (30, 31) and identifies a fault, which can be stored in a pressurization pressure fault log (81).

8. Hydraulic system according to claim 7, **characterised in that**, to carry out the pressurization pressure diagnosis, the diagnosis module (79) starts a charging process at a start time (tₛ), in order to increase the actual accumulator pressure (pₛ) to an upper threshold (pₘₐₓ), wherein the clutch valve (35) arranged in the clutch path (30, 31) is open throughout, in order to detect a chronological actual accumulator pressure curve (pₛ(t)), and that the diagnosis module (79) has an evaluation unit (80), which, if there is a significant difference between at least one reference value (p_{VRef}) and the actual accumulator pressure curve (pₛ(t)), identifies a fault, which can be stored in a pressurization pressure fault log (81).

9. Hydraulic system according to claim 7 or 8, **characterised in that** the pressure accumulator (25) is a piston-cylinder unit, in which an oil chamber (26) connected to the clutch path (30, 31) is acted upon by means of a preloaded pressure piston (27), and that, when the oil chamber (26) is completely emptied, the pressure piston (27) is depressed with a preload force (Fᵥ) against a stop (29) of the pressure accumulator (25) and ambient pressure (pᵤ) prevails in the hydraulic system, and that in a filling and/or charging process, to overcome the preload force (Fᵥ), a hydraulic pressure must be applied to the pressure piston (27), which is greater than the temperature-dependent pressurization pressure (pᵥ), which correlates with the preload force (Fᵥ).

10. Hydraulic system according to claim 8 or 9, **characterised in that** the upper threshold (pₘₐₓ) is greater by a pressure difference than the pressurization pressure (pᵥ) of the pressure accumulator (25), and that, in diagnosis charging operation, the actual accumulator pressure (pₛ(t)) detected by the pressure sensor (34) at a pressurization pressure time (tᵥ) reaches the pressurization pressure (pᵥ) of the pressure accumulator (25), and that, in a further diagnosis charging operation, the oil chamber (26) of the pressure accumulator (25) is filled from the pressurization pressure time (tᵥ), in particular by adjusting the pressure piston (27) as well as by further increasing the actual accumulator pressure (pₛ(t)).

11. Hydraulic system according to claim 10, **characterised in that** the evaluation unit (80) of the diagnosis module (79) compares the actual accumulator pressure (pₛ(tᵥ)) detected by the pressure sensor (34) at the pressurization pressure time (tᵥ) with a predefined reference pressurization pressure (p_{VRef}) of the pressure accumulator (25), and that, with smooth pressure accumulator functioning, the actual accumulator pressure (pₛ(tᵥ)) detected in the pressurization pressure time (tᵥ) corresponds to the reference pressurization pressure (p_{VRef}), and that, with a significant pressurization pressure difference, the evaluation unit (80) identifies a pressurization pressure fault.

12. Hydraulic system according to claim 10 or 11, **characterised in that**, in diagnosis charging operation, the actual accumulator pressure curve (pₛ(t)) rises until it reaches the pressurization pressure (pᵥ) in the pressure accumulator (25) with a steep pressure gradient (Pi) and, in the further course, the actual accumulator pressure curve (pₛ(t)) rises with a shallower pressure gradient (p₂), and that, in the event of a significant change in gradient between the two pressure gradients (p₁, p₂), the evaluation unit (80) identifies the pressurization pressure time (tᵥ).

## Revendications

1. Système hydraulique pour une transmission automatique, en particulier transmission à double embrayage, d'un véhicule automobile, avec lequel des cylindres hydrauliques (22, 23) au moins d'un embrayage (K1, K2) ainsi que des sélecteurs de vitesse (G1 à G4) peuvent être actionnés, lequel système hydraulique présente un accumulateur de pression (25) pour la fourniture d'une pression d'accumulateur (pₛ) dans le système hydraulique, dans lequel une soupape d'embrayage (35) pouvant être commandée par l'unité de commande (39) est agencée dans un trajet d'embrayage (30, 31) menant de l'accumulateur de pression (25) au cylindre hydraulique d'embrayage (23), avec laquelle une pression hydraulique présente sur le cylindre hydraulique d'embrayage (23) peut être réglée, et une soupape de sélecteur de vitesse (38) pouvant être commandée par une unité de commande (39) électronique est agencée dans au moins un trajet de sélecteur de vitesse (32) menant de l'accumulateur de pression (25) au cylindre hydraulique de sélecteur de vitesse (22), avec laquelle la pression hydraulique présente sur le cylindre hydraulique de sélecteur de vitesse (22) peut être réglée, à laquelle unité de commande (39) est associé un capteur de pression (34), avec lequel la pression hydraulique présente sur le cylindre hydraulique d'embrayage (23) peut être détectée, et avec une pompe hydraulique de charge (53) qui refoule du liquide hydraulique dans un processus de charge dans le système hydraulique afin d'augmenter la pression d'accumulateur (pₛ) réelle, **caractérisé en ce que** l'unité de commande (39) présente un module de diagnostic (79), avec lequel un diagnostic de trajet de sélecteur de vitesse peut être réalisé, pour lequel le module de diagnostic (79) vérifie en utilisant le capteur de pression (34) agencé dans le trajet d'embrayage (30, 31) un comportement de fuite dans le trajet de sélecteur de vitesse (32) et reconnaît un cas de dysfonctionnement qui peut être enregistré dans une mémoire d'erreur de trajet de sélecteur de vitesse (87), que pour le diagnostic de trajet de sélecteur de vitesse le module de diagnostic (79) ouvre la soupape d'embrayage (35) agencée dans le trajet d'embrayage (30, 31) afin de détecter avec le capteur de pression (34) une étendue de pression d'accumulateur réelle (pₛ(t)), et établit une liaison de pression entre la soupape de sélecteur de vitesse (38) agencée dans le trajet de sélecteur de vitesse (32) et le capteur de pression (34), en particulier par ouverture d'une soupape de régulation de pression (36), et que pour la réalisation du diagnostic de trajet de sélecteur de vitesse un mode de charge de diagnostic est réalisé, pour lequel la pression d'accumulateur (pₛ(t)) réelle est augmentée jusqu'à une valeur seuil supérieure (pₘₐₓ) à un moment final (t_{Arrêt}), et que le capteur de pression (34) à la fin (t_{Arrêt}) du mode de charge de diagnostic détecte un gradient de pression (ṗ_{K+G}) de l'étendue de pression d'accumulateur (pₛ(t)), et qu'une unité d'évaluation (85) compare le gradient de pression (ṗ_{K+G}) de l'étendue de pression d'accumulateur (pₛ(t)) avec un gradient de pression de référence (ṗ_{ref}) et évalue si une chute de pression ou fuite de sélecteur de vitesse sans erreur ou avec erreur se présente dans l'étendue de pression d'accumulateur (pₛ(t)).

2. Système hydraulique selon la revendication 1, **caractérisé en ce que** la soupape de sélecteur de vitesse (38) est réglable entre une position de soupape de verrouillage (S) et deux positions de soupape de débit (D1, D2), et que le diagnostic de trajet de sélecteur de vitesse est effectué avec la soupape de sélecteur de vitesse (38) non seulement dans sa première mais aussi dans sa seconde position de soupape de débit (D1, D2).

3. Système hydraulique selon l'une quelconque des revendications 1 ou 2, **caractérisé en ce qu'**au moins un premier et un second trajet de sélecteur de vitesse (32) est prévu, et que le diagnostic de trajet de sélecteur de vitesse pour chaque trajet de sélecteur de vitesse (32) est effectué séparément.

4. Système hydraulique selon la revendication 3, **caractérisé en ce que** pour un diagnostic de trajet de sélecteur de vitesse s'effectuant sur le premier trajet de sélecteur de vitesse (32) la soupape de sélecteur de vitesse (38) agencée dans le second ou éventuellement l'autre trajet de sélecteur de vitesse (32) est dans la position de verrouillage (S).

5. Système hydraulique selon l'une quelconque des revendications précédentes, **caractérisé en ce que** le gradient de pression (ṗ_{K+G}) est détecté dans l'étendue de pression d'accumulateur (pₛ(t)) dans un intervalle de temps de mesure (Δt_{M}), dont le moment de démarrage (t_{Démarrage}) correspond à la fin (t_{Arrêt}) du mode de charge de diagnostic ou est effectué directement après, et/ou que non seulement la pression d'accumulateur (pₛ(t_{Démarrage})) réelle au moment de démarrage de mesure (t_{Démarrage}) mais aussi la pression d'accumulateur (pₛ(t_{Fin}) réelle au moment final de mesure (t_{Fin}) sont détectées.

6. Système hydraulique selon l'une quelconque des revendications 1 à 5, **caractérisé en ce que** le diagnostic de trajet de sélecteur de vitesse est effectué comme un diagnostic de suite temporellement après un diagnostic de pression de précontrainte et/ou un diagnostic de trajet d'embrayage, et que le diagnostic de trajet de sélecteur de vitesse est effectué seulement à la condition que dans le diagnostic de trajet d'embrayage au moins un trajet d'embrayage (30, 31) avec une fuite sans erreur soit reconnu, et que le trajet d'embrayage (30, 31) reconnu comme sans erreur puisse être utilisé comme un trajet d'embrayage de référence pour le diagnostic de sélecteur de vitesse.

7. Système hydraulique selon l'une quelconque des revendications précédentes, **caractérisé en ce qu'**un diagnostic de pression de précontrainte peut être réalisé avec le module de diagnostic (79), pour lequel le module de diagnostic (79) vérifie en utilisant le capteur de pression (34) agencé dans le trajet d'embrayage (30, 31) une pression de précontrainte (pᵥ) de l'accumulateur de pression (25) et reconnaît un cas de dysfonctionnement qui peut être enregistré dans une mémoire d'erreur de pression de précontrainte (81).

8. Système hydraulique selon la revendication 7, **caractérisé en ce que** pour la réalisation du diagnostic de pression de précontrainte le module de diagnostic (79) démarre un processus de charge à un moment de démarrage (tₛ) afin d'augmenter la pression d'accumulateur (pₛ) réelle jusqu'à une valeur seuil supérieure (pₘₐₓ), dans lequel la soupape d'embrayage (35) agencée dans le trajet d'embrayage (30, 31) est ouverte en continu afin de détecter une étendue de pression d'accumulateur (pₛ(t)) réelle temporelle, et que le module de diagnostic (79) présente une unité d'évaluation (80) qui reconnaît en présence d'un écart significatif entre au moins une valeur de référence (p_{VRef}) et l'étendue de pression d'accumulateur (pₛ(t)) réelle un cas de dysfonctionnement qui peut être enregistré dans une mémoire d'erreur de pression de précontrainte (81).

9. Système hydraulique selon la revendication 7 ou 8, **caractérisé en ce que** l'accumulateur de pression (25) est une unité à piston et cylindre, pour lequel une chambre à huile (26) reliée au trajet d'embrayage (30, 31) est alimentée au moyen d'un piston de pression (27) précontraint, et que pour une chambre à huile (26) complètement vidée le piston de pression (27) est pressé avec une force de précontrainte (Fᵥ) contre une butée (29) de l'accumulateur de pression (25) et une pression ambiante (pᵤ) règne dans le système hydraulique, et que pour un processus de remplissage ou de charge pour surmonter la force de précontrainte (Fᵥ) une pression hydraulique doit être créée au niveau du piston de pression (27), laquelle est supérieure à la pression de précontrainte (pᵥ) dépendant de la température, en corrélation avec la force de précontrainte (Fᵥ).

10. Système hydraulique selon la revendication 8 ou 9, **caractérisé en ce que** la valeur seuil supérieure (pₘₐₓ) est supérieure d'une différence de pression à la pression de précontrainte (pᵥ) de l'accumulateur de pression (25), et que dans le mode de charge de diagnostic la pression d'accumulateur (pₛ(t)) réelle détectée par le capteur de pression (34) à un moment de pression de précontrainte (tᵥ) atteint la pression de précontrainte (pᵥ) de l'accumulateur de pression (25), et que dans l'autre mode de charge de diagnostic à partir du moment de pression de précontrainte (tᵥ) la chambre à huile (26) de l'accumulateur de pression (25) est remplie, et ce en réglant le piston de pression (27) ainsi qu'en augmentant encore la pression d'accumulateur (pₛ(t)) réelle.

11. Système hydraulique selon la revendication 10, **caractérisé en ce que** l'unité d'évaluation (80) du module de diagnostic (79) compare la pression d'accumulateur (pₛ(tᵥ)) réelle détectée par le capteur de pression (34) au moment de pression de précontrainte (tᵥ) avec une pression de précontrainte de référence (p_{vRef}) prédéfinie de l'accumulateur de pression (25), et que pour une fonction d'accumulateur de pression sans défaut la pression d'accumulateur (pₛ(tᵥ)) réelle détectée dans le moment de pression de précontrainte (tᵥ) coïncide avec la pression de précontrainte de référence (p_{vRef}), et que pour un écart de pression de précontrainte significatif l'unité d'évaluation (80) constate une erreur de pression de précontrainte.

12. Système hydraulique selon la revendication 10 ou 11, **caractérisé en ce que** dans le mode de charge de diagnostic l'étendue de pression d'accumulateur (pₛ(t)) réelle monte jusqu'à l'atteinte de la pression de précontrainte (pᵥ) dans l'accumulateur de pression (25) avec un gradient de pression raide (ṗ₁) et par la suite l'étendue de pression d'accumulateur réelle (pₛ(t)) monte avec un gradient de pression plus plat (ṗ₂), et que l'unité d'évaluation (80) reconnaît en présence d'une modification de gradient significative entre les deux gradients de pression (ṗ₁, ṗ₂) le moment de pression de précontrainte (tᵥ).
